# FASCICULE DE BREVET EUROPEEN

(11) **EP 1 692 345 B1**
(45) Date de publication et mention de la délivrance du brevet: **13.06.2012**
(21) Numéro de dépôt: 04816540.1
(22) Date de dépôt: 13.12.2004
(51) Int. Cl.: E02B 3/06

(54) **ENSEMBLE D'AMARRAGE COMPORTANT DES SYSTEMES MOBILES FLOTTANTS DE DEPLACEMENT DES PANNES**
MIT MOBILEN SCHWIMMSYSTEMEN FÜR BEWEGBARE BALKEN VERSEHENE FESTMACHEANORDNUNG
MOORING ARRANGEMENT PROVIDED WITH FLOATING MOBILE SYSTEMS FOR MOVING BOOMS

(30) Priorité: 12.12.2003 FR 0351051
(43) Date de publication de la demande: 23.08.2006
(73) Titulaire: Bernadac, Jean Claude, 92400 Courbevoie (FR)
(72) Inventeur: Bernadac, Jean Claude, 92400 Courbevoie (FR)
(74) Mandataire: Chaillot, Geneviève
(86) Numéro de dépôt international: PCT/FR2004/050686
(87) Numéro de publication internationale: WO 2005/058683

(56) Documents cités:
- GB-A- 2 236 716
- US-A- 3 635 181
- US-A- 3 672 178
- US-A- 4 342 277

## Description

La présente invention concerne le domaine des pontons flottants utilisés notamment pour amarrer des bateaux et embarcations, en particulier de plaisance à voile ou à moteur, dans les ports maritimes, fluviaux, les voies navigables, etc..

Le développement considérable de la navigation de plaisance ces dernières décennies, en France et dans les pays développés, a conduit à une saturation des ports de plaisance, entraînant des délais d'attente insupportables pour les usagers des ports publics et une flambée des prix des anneaux de ports privés.

L'augmentation du nombre et de la taille moyenne des navires, le développement des larges catamarans de croisière dont l'usage ne va cesser de croître, va contribuer à amplifier rapidement ce phénomène de saturation, alors que les prises de conscience de l'écologie, la loi sur le littoral, réduisent les possibilités de création de nouveaux espaces portuaires.

Dans la majeure partie des cas, le stationnement à flots des bateaux, à voile ou à moteur, dans les ports de plaisance se fait sur corps-morts ou bras d'amarrage et sur des pannes constituées de plusieurs pontons flottants, en laissant à chaque fois un espace dégagé important entre deux rangées de bateaux, pour permettre les manoeuvres de sortie et d'entrée de ces derniers. Ces indispensables aires de manoeuvre sont de gros consommateurs d'espace (plus de 40% des surfaces des bassins portuaires) qui ne peuvent être dévolus au stationnement des bateaux.

GB-A-2 236 716 décrit des pannes se déplaçant par rapport à un ou des quais fixes ou flottants, par exemple à l'aide de rails crémaillères ou autres moyens adaptés, dont certains sont immergés. Ces dispositifs n'ont jamais pu être exploités en raison de l'impossibilité à maintenir des pannes de grande longueur toujours perpendiculaires aux quais principaux par les moyens développés par GB-A-2 236 716 compte tenu de la prise du vent (fardage) avec des bateaux amarrés, des techniques immergées de guidage décrites, peu réalistes, du fait des problèmes de corrosion. A aucun moment, des pannes mobiles de ce type ne sont stables.

La présente invention a pour objectif de remédier à ces inconvénients. A cet effet, il est proposé des systèmes mobiles flottants qui font office de bras d'amarrage et entre lesquels sont fixés des éléments de pannes. Ces systèmes se déplacent d'une façon coordonnée autour de points fixes que sont des pieux ou ducs-d'Albe fichés dans le fond du bassin portuaire, en entraînant les éléments de panne et les bateaux qui leur sont amarrés, afin de disposer d'un seul espace de manoeuvre pour un ensemble de plusieurs pannes.

La présente invention a pour objet un ensemble de systèmes mobiles flottants tel que revendiqué dans la revendication 1.

Conformément à une caractéristique particulièrement intéressante de la présente invention, les extrémités des systèmes mobiles flottants portent des moyens d'amarrage de façon à constituer des bras d'amarrage.

Les moyens prévus pour accrocher et décrocher deux pannes adjacentes peuvent être agencés pour assurer une liaison adaptée pour résister aux mauvaises conditions météorologiques et pour suivre les mouvements de l'eau et des marées.

Les moyens de guidage d'un système mobile flottant peuvent être constitués par un chariot entourant un duc-d'Albe formant coulisseau apte à monter et à descendre le long du duc-d'Albe pour suivre le mouvement de l'eau ou des marées, ledit chariot comportant extérieurement des organes de roulement apte à coopérer avec des rails du système mobile flottant.

Chaque système mobile flottant peut être entraîné par au moins un câble raccordé au chariot aux deux bords opposés de celui-ci perpendiculaires à des rails, et susceptibles d'être tracté par un moteur de telle sorte que la traction d'un câble lié à un bord permet le coulissement de la structure mobile flottante en sens inverse de la traction exercée par le câble.

Conformément à un autre mode de réalisation possible, un moteur embarqué sur le chariot met en mouvement une ou des roues crantées qui circulent sur un ou deux rails-crémaillères, de telle sorte que ce mouvement entraîne le déplacement du système mobile flottant dans un sens ou dans l'autre.

Conformément à un mode de réalisation particulier, un système mobile flottant comporte une structure de support allongée avec deux poutres en regard portant intérieurement les rails destinés à coopérer avec les organes de roulement du chariot du duc-d'Albe, lesdites poutres étant réunies à leurs extrémités par des structures de liaison, lesdites poutres et, le cas échéant, les structures de liaison étant portées par au moins un dispositif de flottaison, des moyens étant portés par lesdites poutres permettant leur raccordement à la panne ou aux tronçons de panne, avec renforcement éventuel au droit dudit raccordement par des vérins de triangulation, les extrémités de ladite structure présentant les moyens d'accrochage complémentaires de moyens portés par la structure du système mobile flottant adjacent, afin de constituer des trains de systèmes mobiles flottants dans les positions accrochées des systèmes concernés.

Conformément à une première variante, les deux espaces entre les deux rails de part et d'autre du chariot associé au duc-d'Albe peuvent être fermés par un caillebotis qui s'enroule et se déroule de part et d'autre du chariot en fonction du déplacement du système mobile flottant par rapport au duc-d'Albe, un platelage circulable venant recouvrir la structure autour du caillebotis.

Des moyens peuvent être avantageusement prévus pour permettre l'enroulement ou le déroulement de l'un des caillebotis à une vitesse dépendant du déroulement ou de l'enroulement de l'autre caillebotis.

De tels moyens d'enroulement/déroulement d'un caillebotis par rapport à l'autre peuvent consistent en au moins une chaîne de longueur et d'épaisseur proportionnelles respectivement à la longueur et à l'épaisseur du caillebotis enroulable et montée pour s'enrouler autour de l'axe d'enroulement du premier caillebotis dans le sens inverse de celui-ci et sur l'axe parallèle du second caillebotis également dans le sens inverse de ce dernier, de telle sorte que, lorsque le premier caillebotis est entièrement enroulé sur son axe, la chaîne est complètement déroulée sur ce même axe et complètement enroulée sur ledit second axe, alors que le deuxième caillebotis est entièrement déroulé, ladite chaîne étant entraînée par le déroulement du premier caillebotis, lui-même entraîné par le moteur déplaçant la structure.

Conformément à une seconde variante, la protection de l'ouverture centrale des systèmes peut être assurée par un garde-corps positionné autour de la zone de translation du duc-d'Albe, une zone de passage dans l'axe des tronçons de pannes étant aménagée grâce à une passerelle relevable.

Par ailleurs, entre les deux rails d'un système mobile flottant, peuvent être disposées des entretoises de maintien d'écartement, lesdites entretoises étant agencées pour s'effacer lorsque le déplacement de la structure les amène au voisinage du bord du chariot et pouvant servir de support à un câble tracteur.

Conformément à une autre caractéristique possible de la présente invention, chaque panne comporte plusieurs tronçons de pontons d'amarrage raccordés aux systèmes mobiles flottants, étant complétée par un système mobile flottant dit de quai adapté pour coulisser le long d'un ponton flottant fixe classique et par un système mobile flottant dit de tête (207a, 207b, 207c, 207d) situé à l'extrémité opposée de la panne côté accès des bateaux et pouvant servir de ponton d'attente.

Egalement, le raccordement entre les pannes ou tronçons de pannes et les systèmes mobiles peut s'effectuer à un niveau choisi pour permettre, de part et d'autre de la panne, deux longueurs égales ou différentes, suivant les besoins, d'emplacement pour les bateaux B et embarcations.

Conformément à une autre caractéristique particulière, chaque point fixe est formé par plusieurs ducs-d'Albe dont les chariots associés sont reliés par un dispositif articulé de liaison.

La présente invention porte également sur une installation portuaire comportant des pannes déplaçables par l'ensemble de systèmes mobiles flottants motorisés tels que définis ci-dessus.

Le système de la présente invention garantit donc un déplacement perpendiculaire de pannes d'amarrage par des moyens simples, non immergés.

Pour mieux illustrer l'objet de la présente invention, on va en décrire ci-après plusieurs modes de réalisation avec référence aux dessins annexés, sur lesquels :
- les Fig. 1 et 2 sont des vues schématiques de dessus d'un bassin portuaire dont les pannes sont équipées de systèmes mobiles flottants d'entraînement de celles-ci, afin de les déplacer parallèlement à elles-mêmes sur la surface de l'eau, la Fig. 1 montrant toutes les pannes mobiles refermées à l'exception de la première travée entre une panne fixe et la première panne mobile ; et la Fig. 2 illustrant une situation dans laquelle des pannes ont été déplacées pour ménager une aire de manoeuvre entre deux autres pannes mobiles ;
- les Fig. 3 à 5 sont des vues de dessus à plus grande échelle de l'un des systèmes mobiles flottants d'une panne dans trois positions respectives, à savoir les deux positions limites et une position intermédiaire par rapport à un duc-d'Albe associé ;
- la Fig. 6 est une vue de dessus à plus grande échelle de l'un des systèmes mobiles flottants, avec un bateau amarré à gauche, ledit système comportant des moyens d'entraînement conformes à un premier mode de réalisation, par câble et poulies, et utilisant un système central de caillebotis longitudinaux escamotables par enroulement ;
- la Fig. 7 est une vue latérale du système mobile flottant de la Fig. 6, avec un bateau amarré à droite, dont la partie droite est représentée en élévation, et la partie gauche en coupe selon la ligne VII-VII de la Fig. 6 ;
- la Fig. 8 est une vue en perspective du système mobile flottant conforme au premier mode de réalisation précité, avec divers arrachements montrant divers éléments de structure internes ;
- la Fig. 9 montre à plus grande échelle la zone centrale de jonction du système mobile flottant de la Fig. 6 avec les deux tronçons de pontons d'amarrage constituant la panne, situés de part et d'autre de celui-ci, le système mobile flottant s'étant déplacé vers la droite par rapport au duc-d'Albe associé ;
- la Fig. 10 est une vue de détail de dessus du système mobile flottant de la Fig. 9 avec son chariot associé, montrant une entretoise mobile, un arrachement ayant été pratiqué pour montrer la coopération du chariot et des rails ;
- la Fig. 11 est une vue latérale en coupe selon XI-XI de la Fig. 10, la coupe étant effectuée sur une entretoise mobile ;
- la Fig. 12 est, à plus grande échelle, une vue de la partie de gauche de la Fig. 10, tournée de 90°, le platelage de la panne ayant été retiré afin de montrer les rails de coulissement du système et le dispositif de manoeuvre de l'entretoise de maintien d'écartement des rails latéraux du système, dont les positions extrêmes sont représentées en traits mixtes ;
- la Fig. 13 est une vue en coupe selon XIII-XIII de la Fig. 12 ;
- la Fig. 14 est une vue en coupe transversale selon XIV-XIV de la Fig. 6, avec des flotteurs d'un type différent, et la Fig. 15 est une vue en coupe à plus grande échelle de l'ensemble chariot-rails, selon XV-XV de la Fig. 10 ;
- la Fig. 16 est une vue en détail de dessus du chariot le long duquel se déplace le système mobile flottant, des arrachements pratiqués dans les rails montrant les roues du chariot et le câble qui déplace le chariot ;
- la Fig. 17 est une vue en coupe transversale selon XVII-XVII de la Fig. 16;
- la Fig. 18 est un grossissement L du détail de la Fig. 17 du système de clipsage du caillebotis sur l'un des deux rails-crémaillères du système mobile flottant ;
- la Fig. 19 est une vue de dessus, à plus grande échelle, d'une extrémité du système mobile flottant dans la région de la jonction du caillebotis;
- la Fig. 20 est une vue latérale en coupe selon XX-XX de la Fig. 19 ;
- la Fig. 21 est une vue en perspective de trois éléments constitutifs du caillebotis, montrant leur mode de réalisation et articulation ;
- les Fig. 22 et 24 sont des vues de dessus des régions d'extrémité du système mobile flottant selon le premier mode de réalisation précité, dans les deux positions limites respectives de son déplacement ;
- les Fig. 23 et 25 sont des vues latérales en coupe respectivement selon XXIII-XXIII de la Fig. 22 et selon XXV-XXV de la Fig. 24 ;
- la Fig. 26 est une vue partielle d'un système mobile flottant conforme à une variante du premier mode de réalisation, apte à coopérer avec deux ducs-d'Albe au lieu d'un, le système mobile flottant étant représenté dans une position intermédiaire centrale de son déplacement ;
- la Fig. 27 est une vue latérale en coupe selon XXVII-XXVII de la Fig. 26 ;
- la Fig. 28 est une vue analogue à la Fig. 26, mais avec un seul duc-d'Albe et montrant un système mobile flottant comportant des moyens d'entraînement conformes à un second mode de réalisation par rails-crémaillères et roues dentées avec un moteur embarqué sur le chariot ;
- la Fig. 29 est une vue latérale en coupe selon XXIX-XXIX de la Fig. 28 ;
- la Fig. 30 est une vue analogue à la Fig. 28, montrant un système mobile flottant conforme à une variante du second mode de réalisation précité, apte à coopérer avec deux ducs-d'Albe au lieu d'un ;
- la Fig. 31 est une vue latérale en coupe selon XXXI-XXXI de la Fig. 30 ;
- la Fig. 32 est une vue de dessus de la partie centrale du système mobile flottant, comportant les moyens d'entraînement du premier mode de réalisation, dans une variante n'utilisant pas de caillebotis escamotable par enroulement, mais un système de barrières latérales de protection et une passerelle centrale escamotable par pivotement située dans l'axe de la panne associée ;
- la Fig. 33 est, à plus grande échelle, une vue en coupe transversale selon XXXIII-XXXIII de la Fig. 32, la position relevée de la passerelle apparaissant en traits mixtes ;
- les Fig. 34 et 35 sont des vues axonométriques de la partie centrale du système mobile flottant de la Fig. 32, dans deux positions différentes, la première avec les deux parties de passerelle relevées pour permettre le passage de cette partie centrale au niveau du duc-d'Albe lors du déplacement du système mobile flottant, la seconde, avec les deux parties de passerelle rabattues pour permettre le passage des usagers;
- la Fig. 36 montre, en vue partielle de dessus et à plus petite échelle, la jonction d'un système mobile flottant dit « de quai » selon l'invention au ponton fixe flottant classique, adjacent au quai et apte à se déplacer verticalement pour suivre le niveau des marées ;
- la Fig. 37 est une vue partielle de dessus, à plus grande échelle, de la jonction précitée ;
- la Fig. 38 est une vue en coupe selon XXXVIII-XXXVIII de la Fig. 37 ;
- les Fig. 39 et 40 sont des vues agrandies de dessus des extrémités en vis-à-vis de deux systèmes mobiles flottants conformes au premier ou au second mode de réalisation précité, avec caillebotis relevable, respectivement dans leur position décrochée (Fig..39) et accrochée (Fig. 40) ;
- la Fig. 41 est une vue axonométrique des extrémités de deux systèmes mobiles flottants de la Fig. 38, avec un détail en loupe montrant les moyens d'accrochage ; et
- la Fig. 42 est une vue schématique du dispositif de commande électrique et électromécanique des pannes.

Dans la description et sur les dessins, certains chiffres de référence sont suivis par des lettres a, b, c, etc., A, B, C, etc. ou par des « ' », « '' », car ils désignent des pièces ou éléments identiques sur différentes pannes ou ils sont symétriques par rapport à la ligne longitudinale moyenne des systèmes mobiles flottants de l'invention. Pour des raisons de simplification, on a parfois utilisé ces chiffres sans leurs lettres ou signes associés.

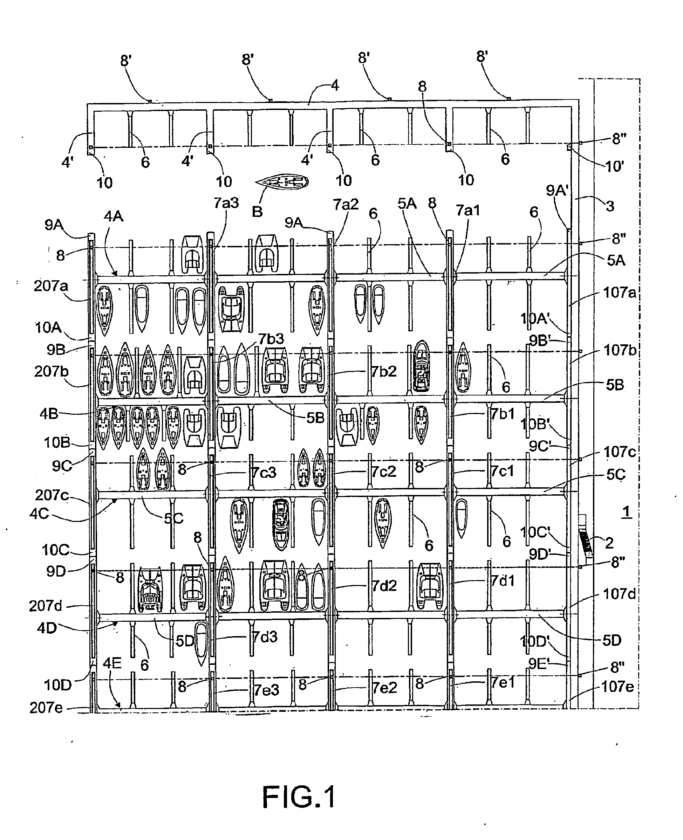

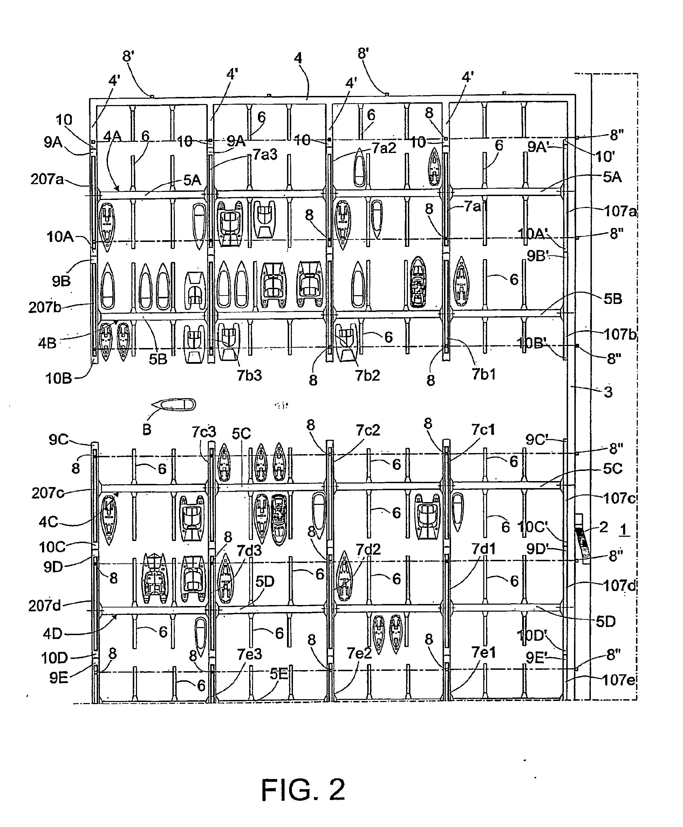

Le bassin portuaire tel que représenté sur les Fig. 1 et 2 comporte un quai fixe 1, classique, relié par une passerelle 2 à un ponton flottant 3, dit fixe, montant et descendant de façon classique selon les marées. Le ponton 3 est parallèle au quai 1 et comporte, à une extrémité perpendiculaire au quai 1, une panne fixe 4, présentant intérieurement des retours formant des bras d'amarrage 4' et entre ceux-ci, des bras d'amarrage plus petits appelés « catways » 6.

A l'opposé du ponton 4, se trouvera un quai fixe ou un ponton flottant dit fixe du même type qui n'a pas été représenté sur les Figures 1 et 2, lesquelles illustrent une partie seulement du bassin. Ces parties fixes sont destinées à permettre un maintien des pannes 4 dans leurs positions extrêmes d'arrêt, quelle que soit la travée qui est ouverte pour le passage des bateaux B.

Le ponton flottant 3 permet l'accès à des pannes mobiles successives 4A, 4B, 4C, 4D, qui sont perpendiculaires à celui-ci, la panne 4A étant disposée au voisinage de la panne fixe 4 en retour du ponton flottant 3. Ainsi, les pannes 4A à 4D montent et descendent avec la marée en même temps que le ponton flottant 3 et la panne 4. Toutefois, contrairement aux pannes classiques, telles que la panne 4, ces pannes 4A à 4D sont aptes à se déplacer dans un plan horizontal en restant toujours perpendiculaires au ponton 3 parallèle au quai fixe 1. Celui-ci sert également de guide auxiliaire auxdites pannes 4A à 4D comme cela sera décrit ci-après.

Sur le dessin, on a représenté quatre de ces pannes mobiles et, en partie, une cinquième. Le nombre de pannes dépendra de la longueur du quai 1. En pratique, on recherchera le meilleur compromis entre le nombre de pannes et les durées d'attente générées par l'ouverture et la fermeture des différentes aires de manoeuvre et des temps de manoeuvre des bateaux.

Chaque panne 4A à 4D est constituée par un alignement, perpendiculaire à la branche parallèle au quai 1 du ponton 3, de tronçons de pontons d'amarrage successifs, respectivement 5A à 5D ; les tronçons de pontons formant une panne sont au nombre de quatre dans l'exemple représenté.

De part et d'autre de chaque tronçon de ponton 5A à 5D, sont disposés des bras d'amarrage latéraux nécessaires pour amarrer les bateaux, de type « catway » tous désignés par le même chiffre de référence 6. Le nombre et la longueur des « catways » est fonction de la taille des bateaux. Etant classiques, ils ne seront pas décrits plus en détail ici. Ces catways sont positionnés suivant les longueurs des bateaux concernés, de façon classique deux bateaux étant amarrés de part et d'autre d'un catway.

Ainsi, dans l'exemple représenté, les catways situés d'un côté d'une panne sont plus longs que ceux situés de l'autre côté. L'organisation des catways est classique pour un chef de port. Toutefois, ici, la longueur des catways devra toujours être inférieure à celle de la partie voisine des systèmes mobiles flottants de l'invention.

Des systèmes mobiles flottants 7a1, 7a2, 7a3 ; 7b1, 7b2, 7b3 ; 7c1, 7c2, 7c3 ; 7d1, 7d2, 7d3 ; 7e1, 7e2, 7e3 (désignés aussi de façon générale par 7a, 7b, 7c ou par 7) sont disposés entre les tronçons de pontons d'amarrage respectivement 5A, 5B, 5C, 5D, d'une panne 4A, 4B, 4C, 4D, perpendiculairement à l'alignement des tronçons de pannes. Ils se situent en vis-à-vis des bras d'amarrage principaux 4' de la panne fixe 4 et constituent aussi des bras d'amarrage. Ces systèmes coopèrent entre eux et sont guidés comme cela sera décrit plus en détail ci-après, par un pieu ou un duc-d'Albe 8, planté de façon classique verticalement dans le fond du bassin portuaire. La panne fixe 4 est tenue de façon classique par des ducs-d'Albe, également notés 8, situés extérieurement au bassin portuaire ainsi constitué. De même, les bras d'amarrage 4' sont comme le ponton 3 et la panne 4 aptes à monter et descendre selon le mouvement des marées le long de ducs-d'Albe 8 situés à leurs extrémités. Les ducs-d'Albe 8 sont disposés selon un quadrillage à mailles quadrilatères, cette disposition étant nécessaire pour l'alignement des systèmes 7 de l'ensemble (ainsi qu'avec les bras 4') perpendiculairement aux pannes 4, ainsi que pour la fermeture des pannes 4.

Les systèmes 7 de l'invention peuvent avoir une longueur de l'ordre d'une trentaine de mètres.

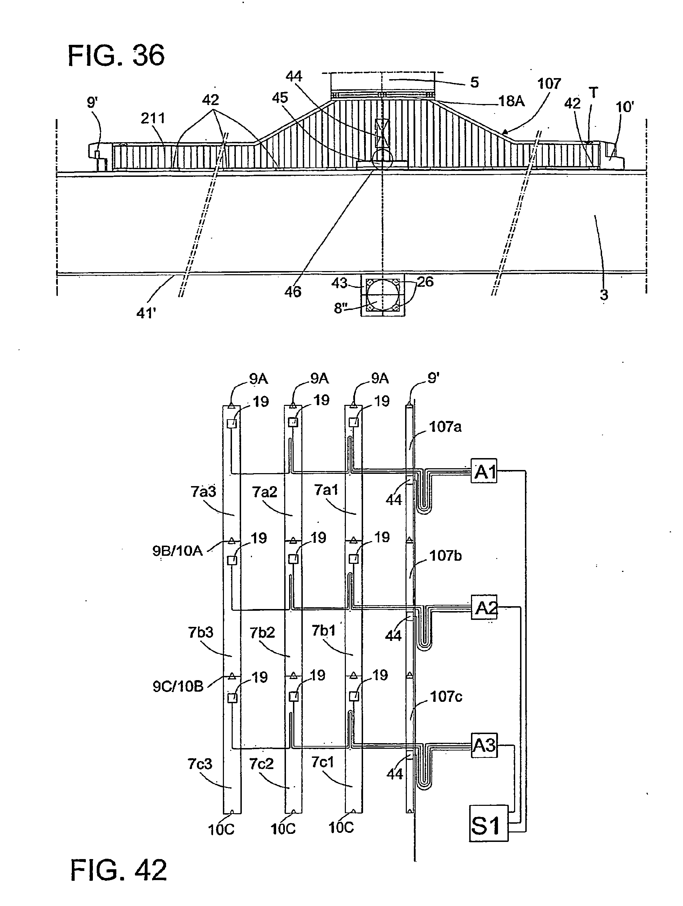

Par ailleurs, chaque extrémité des pannes 4A, 4B, 4C, 4D est guidée le long du ponton fixe classique 3 par un système mobile flottant d'amarrage dit « de quai », respectivement 107a, 107b, 107c, 107d, l'extrémité du premier tronçon de ponton flottant d'amarrage 5A, 5B, 5C, 5D, etc. étant perpendiculaire avec lui. Les systèmes 107 seront décrits plus en détail ci-après avec référence aux Fig. 36 à 38.

A l'extrémité opposée de chaque panne 4A à 4D, 4E etc. de l'ensemble flottant d'amarrage ainsi constitué, c'est-à-dire du côté de l'entrée et sortie des bateaux, se trouve un système mobile flottant d'amarrage dit « de tête », respectivement 207a, 207b, 207c, 207d, 207e qui coopère à l'ensemble et est aussi guidé par un duc-d'Albe 8, relié d'un côté seulement au dernier tronçon de ponton d'amarrage respectivement 5A à 5D, 5E, etc.

Les systèmes mobiles flottants 7a à 7e; 107a à 107e ; 207a à 207e, en plus d'être agencés pour entraîner les pannes 4A à 4E comme décrit plus complètement dans ce qui suit, font également, comme déjà indiqué, office de bras d'amarrage, d'un seul côté pour les systèmes dits de quai 107a à 107e etc. et des deux côtés pour les systèmes intermédiaires 7a à 7e, etc. et pour les systèmes de tête 207a à 207e, etc. Les bateaux arrivant dans le bassin portuaire pourront ainsi, si nécessaire, s'amarrer provisoirement aux flancs extérieurs de ces derniers (emplacements d'attente).

Tous les systèmes mobiles flottants, « de quai », « intermédiaires » et « de tête », sont raccordés dans leur zone centrale à leurs tronçons de pontons d'amarrage respectifs. La hauteur (franc-bord) de ces systèmes par rapport au niveau de l'eau est avantageusement adaptable à celle des pontons existants.

Tous ces systèmes, à l'exception des pontons dits « de quai », comportent chacun une ouverture longitudinale traversée par un duc-d'Albe 8. Ils se déplacent selon leur axe longitudinal entre une position où le duc-d'Albe 8 se trouve à une extrémité de l'ouverture et une autre position où il se trouve à l'autre extrémité. Les deux extrémités extérieures mâles et femelles, d'un système flottant sont notées 9A, 10A ; 9B, 10B ; 9C, 10C ; 9D, 10D respectivement pour chacun des systèmes 7a, 7b, 7c, 7d, etc..

Les bras d'amarrage « catway » 6, sont plus courts que les moitiés des systèmes 7a à 7e etc. ; 107a à 107e, etc. ; 207a à 207e, etc., lesquels sont tous de longueur égale. Ces derniers sont en effet destinés à coopérer entre eux par leurs extrémités 9B, 10A ; 9C, 10B; 10C, 9D, pour former des trains de systèmes mobiles parallèles au quai 1, (Fig. 1 et 2). De même, les extrémités 9A coopéreront avec les extrémités des bras d'amarrage 4', équipés de moyens 10 analogues aux moyens 10A, 10B, etc. de façon à renforcer la cohésion de l'ensemble et pour résister aux mauvaises conditions météorologiques.

Les extrémités des systèmes mobiles « de quai » sont également équipées de moyens d'accrochage mâles/femelles 9A', 9B', etc., 10A', 10B', etc ; l'extrémité 9 A' du premier élément 107a venant en butée sur une pièce d'accrochage de même type 10' portée par le ponton fixe 3.

Dans l'exemple représenté (Fig. 1 et 2), les espaces réservés aux bateaux sont de dimensions différentes de part et d'autre des pannes. Il va de soi que l'on pourrait prévoir des espaces de longueurs égales. On peut ainsi organiser comme on le souhaite des emplacements pour des bateaux de différentes catégories. Les catway 6 situés à ces emplacements sont de longueurs différentes pour les mêmes raisons.

Sur la Fig. 1, les pannes 4A à 4D sont dans leur position fermée, fixées les unes aux autres par les extrémités en vis-à-vis des différents systèmes mobiles flottants 7. Seul un côté de la panne 4 est ouvert. Sur la Fig. 2, l'espace entre les pannes 4B et 4C est ouvert. Les bateaux peuvent ainsi manoeuvrer selon le cas dans l'espace entre la panne fixe 4 (Fig. 1) et la panne 4A, et entre les pannes 4B et 4C. (Fig. 2).

Dans tous les cas de figure, les extrémités 9 ou 10 des systèmes mobiles, en position ouverte, sont en butée sur un duc-d'Albe, rendant l'ensemble indéformable, même par mauvaises conditions atmosphériques, l'autre extrémité du système étant accrochée à son vis-à-vis, lui-même en butée sur un duc-d'Albe.

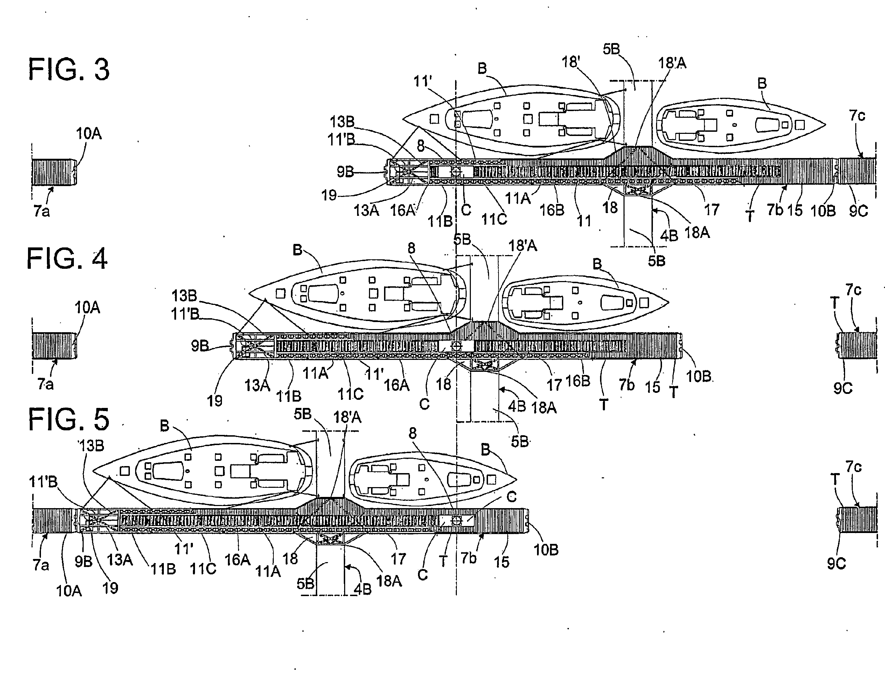

Sur les Fig. 3 à 5 est représenté, vu de dessus, un système mobile flottant (7b de la panne 4B) des Fig. 1 et 2 dans trois positions différentes par rapport à son duc-d'Albe associé 8.

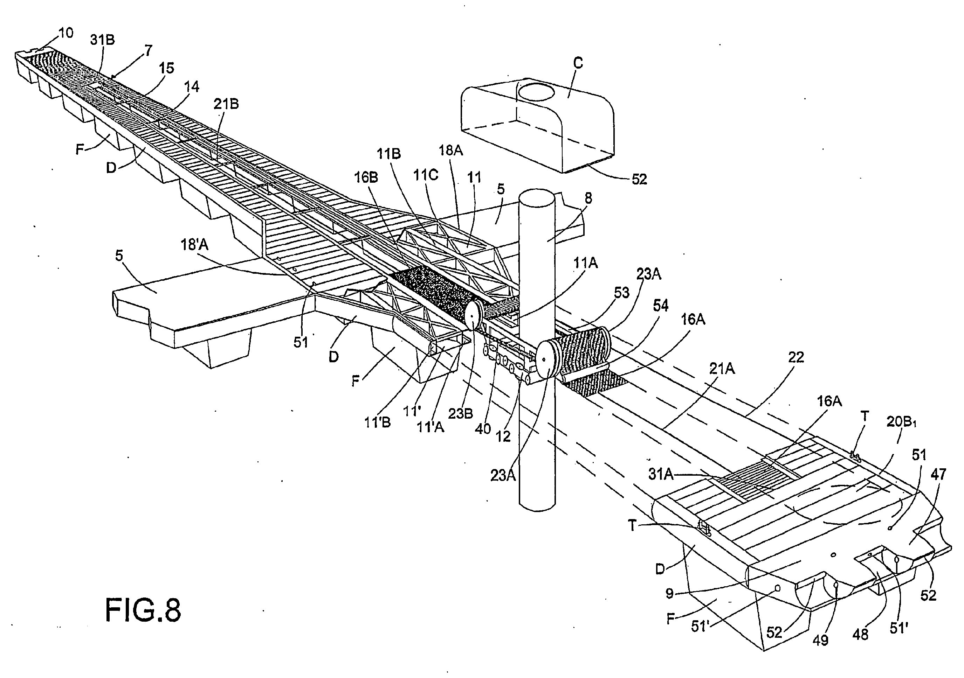

La structure de ce système 7b - qui est la même pour les autres systèmes 7a, 7c et 7d, etc - va maintenant être décrite avec référence à la Fig. 8.

Le système mobile 7 est constitué de deux poutres métalliques 11 et 11', parallèles entre elles et disposées à distance l'une de l'autre, pour permettre le passage du duc-d'Albe associé 8 et d'un chariot 12 entourant ce dernier dont le rôle est décrit ci-après. Chaque poutre est formée de deux profilés parallèles 11A, 11B ; 11'A, 11'B, de section rectangulaire, réunis par des raidisseurs 11C. Le profilé interne (11A ; 11'A) de chacune des poutres, présente sur sa face latérale libre, tournée vers l'autre, une ouverture partiellement refermée, de sorte qu'il constitue un rail (désigné 11A ; 11'A).

Les profilés externes 11B, 11'B portent en plusieurs endroits des taquets T d'amarrage de bateaux, ainsi que des défenses latérales de protection D.

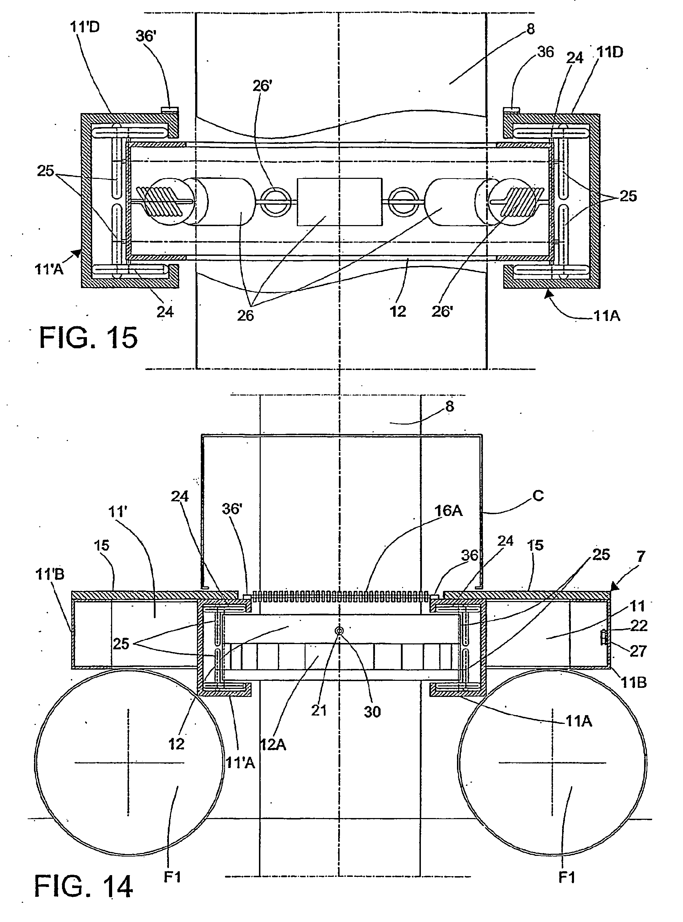

Chaque système mobile flottant 7 comporte des flotteurs F sous les poutres 11, 11', de chaque côté de l'espace permettant le passage du duc-d'Albe 8 lors du déplacement dudit système (de type catamaran). Ces flotteurs F se présentent sous la forme de blocs classiques (mousse injectée dans une coque plastique). Ils peuvent également être du type boudins gonflables F1 tels que ceux représentés sur la Fig. 14. Dans ce cas, ils sortent avantageusement de la structure des systèmes 7 pour absorber éventuellement les chocs dus aux bateaux.

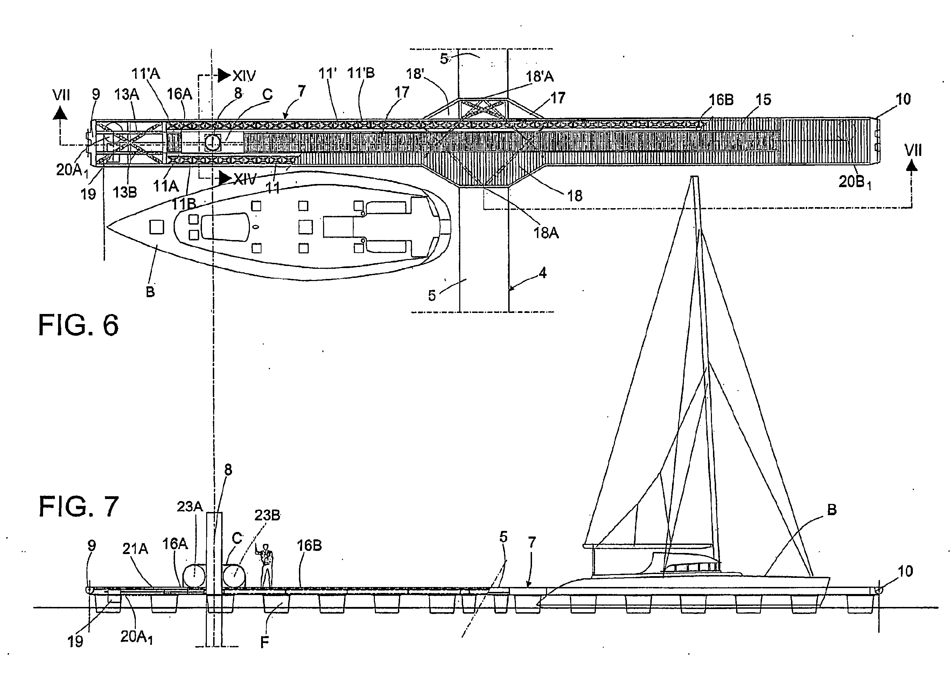

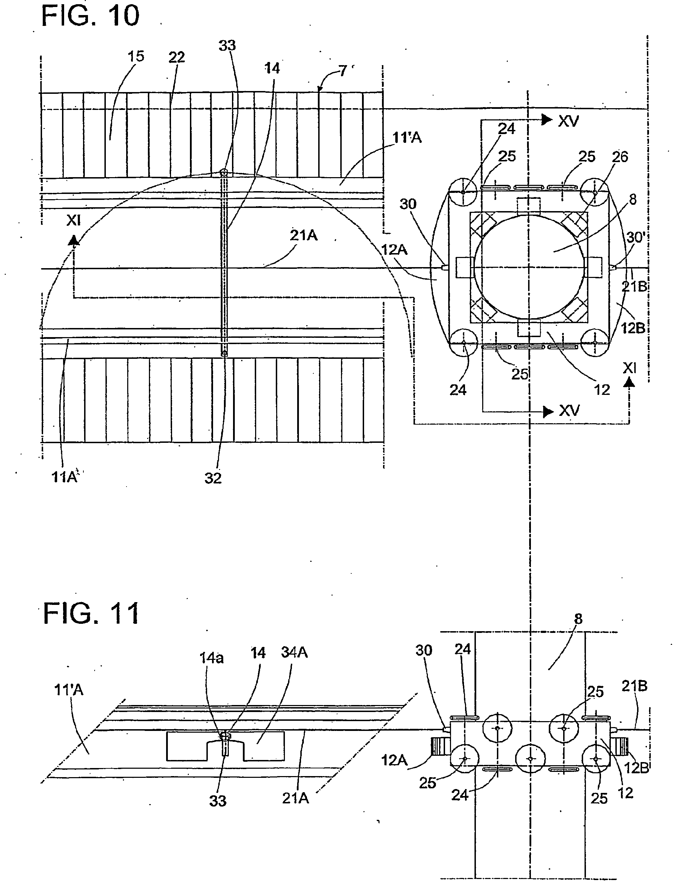

Afin de rigidifier chaque système mobile flottant 7, des structures métalliques de renfort 13A, 13B (Fig. 3 à 6) sont disposées à ses extrémités, 9 et 10, et, comme on peut le voir aussi entre autres sur la Fig. 10, des entretoises 14 s'étendent d'un rail 11A à l'autre (11'A), ces entretoises 14 étant escamotables par pivotement dans le rail comme cela sera décrit ci-après.

En dehors de l'espace situé entre les rails 11A et 11'A, le système 7 est recouvert d'un platelage 15 de type classique dans le domaine nautique.

Par ailleurs, entre les rails 11A et 11'A, et de part et d'autre du chariot 12 entourant le duc-d'Albe 8, l'espace est, notamment pour la sécurité des usagers, refermé par un caillebotis déroulable 16A (à gauche du chariot 12 en regardant les Fig. 3 à 5 et 16B, à droite) qui s'enroule et se déroule (comme cela sera décrit ci-après) de part et d'autre du duc-d'Albe 8 en fonction du déplacement du système 7 par rapport à ce dernier. Cet enroulement/déroulement est tel que l'espace central du système 7 est toujours recouvert (en dehors de l'espace occupé par le chariot 12) par un caillebotis permettant le passage des usagers.

Pour consolider la jonction entre le système mobile flottant 7b et un tronçon de panne 5, il est également prévu un renfort 18 et 18', de forme trapézoïdale, qui vient élargir le système 7 au niveau de cette jonction.

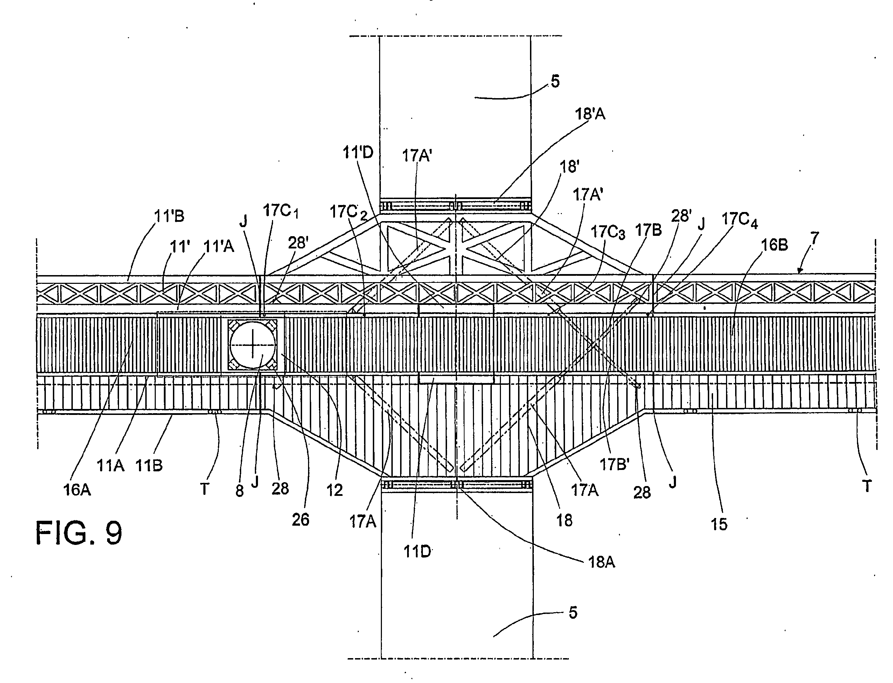

Le système mobile flottant 7 est adapté aux deux tronçons de panne d'amarrage 5 de part et d'autre de celui-ci par un système d'accrochage respectivement 18A, 18'A, qui est porté par les bordures libres externes des renforts 18 et 18' et que l'on peut mieux voir sur la Fig. 9, étant notamment du type à oreilles sur pivots, permettant, d'une part une adaptation aux différentes sortes de pontons fabriqués couramment, et, d'autre part, un léger mouvement autour de l'axe horizontal de la liaison 18A, 18'A pour s'adapter aux mouvements du plan d'eau.

La sous-face des plates-formes 18, 18' est équipée de vérins horizontaux de triangulation 17 dont les cylindres sont désignés par le chiffre 17A, 17A' et les pistons-tiges, par le chiffre 17B, 17B', les cylindres 17A, 17A' étant fixés par tous moyens à la plate-forme associée, chacun à l'intérieur du trapèze.

En position sortie, les tiges des pistons prennent des positions telles que représentées sur la partie droite de la Fig. 9, formant ainsi des bras de renforcement, leurs extrémités venant se verrouiller dans des trous borgnes 28, 28', prévus à cet effet dans le rail opposé.

Le long du rail 11'A, sont disposés des palpeurs 17C₁, 17C₂, 17C₃, 17C₄, les palpeurs 17C₁ et 17C₂, étant situés de part et d'autre du point de croisement des tiges sorties 17B situées à gauche sur la Fig. 9, et les palpeurs 17C₃ et 17C₄ étant situés de part et d'autre du point de croisement des tiges sorties 17B situées à droite.

Lorsque le chariot 12 vient au contact des palpeurs 17C₁ ou 17C₄, suivant le sens de déplacement du système, les tiges 17B des vérins 17 se rétractent pour laisser le passage au chariot et se redéploient lors du contact du chariot 12 avec les palpeurs 17C₂ ou 17C₃, suivant le sens de déplacement du système, après le passage du chariot.

Il est également possible de prévoir que les systèmes mobiles flottants soient réalisés en trois parties modulaires, à savoir une partie centrale comportant les renforts trapézoïdaux et deux parties latérales identiques, de longueurs pouvant être différentes, avec les extrémités comportant les parties d'accrochage mâles et femelles appropriées. Les jonctions de cette partie centrale et des parties latérales ont été symbolisées par la lettre J sur la Fig. 9 entre autres. De telles jonctions seraient notamment du type des jonctions 18A et 18'A.

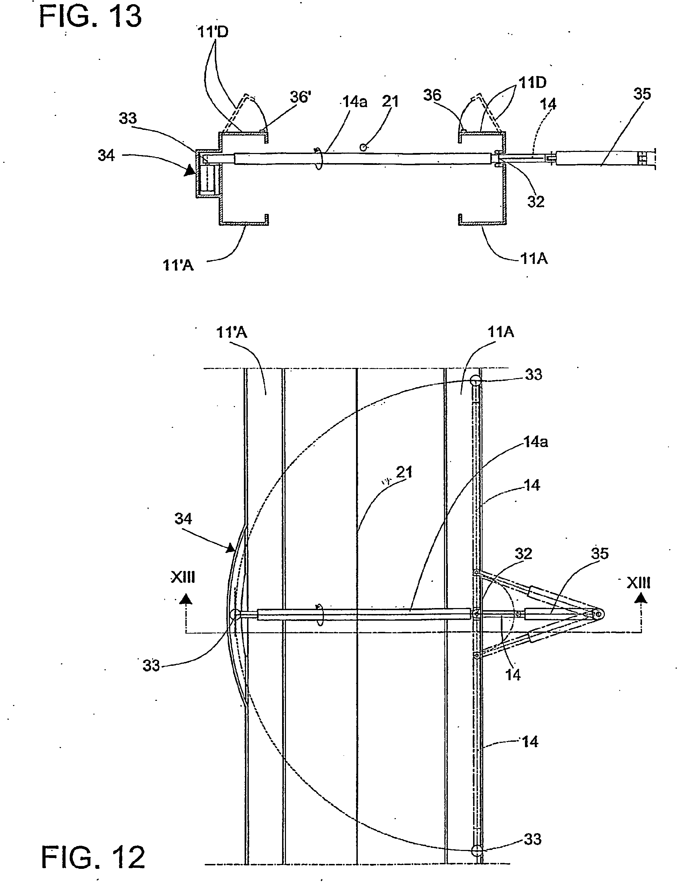

Lors de l'assemblage du système 7, on rassemble les parties gauche et droite du système à la partie centrale, lesquelles sont séparées pour être transportées entre le lieu de fabrication et le bassin portuaire. La partie centrale 11D, 11'D des rails 11A et 11'A est amovible afin de permettre l'installation du chariot 12 et son entretien (voir également Fig. 13).

Dans la position de la Fig. 3, l'extrémité femelle 10B du système 7b est fixée à l'extrémité mâle 9C du système 7c et le duc-d'Albe 8 est en butée sur le système 7b au voisinage de son extrémité mâle 9B, le caillebotis 16A étant enroulé, et le caillebotis 16B, déroulé au maximum, le passage étant ouvert entre les pannes 4A et 4B. Dans la position de la Fig. 4, le système 7b est en cours de déplacement et ses extrémités 9B et 10B sont libres, les caillebotis 16A et 16B étant partiellement enroulés (ou déroulés). Dans la position de la Fig. 5, l'extrémité 9B du système 7b est fixée à l'extrémité 10A du système voisin 7a, les caillebotis 16A, 16B étant dans leurs positions inverses de celle de la Fig. 3 et le passage étant alors ouvert entre les pannes 4B et 4C.

Le chariot 12 d'un système mobile flottant 7 entourant son duc-d'Albe 8 guide ledit système 7 en coopérant avec les rails 11A et 11'A.

La partie supérieure centrale 11D, 11'D des rails 11A et 11'A (Fig. 9 et 13) est avantageusement montée pivotante afin de permettre d'ouvrir ces derniers lorsque l'on souhaite assurer une maintenance du chariot 12.

Le chariot 12 est constitué d'un cadre carré en profilé métallique, comportant, sur les côtés en regard des rails 11A et 11'A, des systèmes de roulements latéraux, horizontaux 24 et verticaux 25, lui permettant de se déplacer à l'intérieur des rails 11A et 11'A tout en maintenant un écartement constant de ces derniers.

Dans chacun des quatre angles intérieurs du chariot 12 et au centre des quatre côtés de celui-ci, des galets 26 de roulement horizontaux permettent au chariot de coulisser librement verticalement le long du duc-d'Albe 8 afin de suivre le mouvement des marées de façon classique. Les galets 26 sont montés sur des ressorts 26', ce qui permet d'amortir les mouvements latéraux du chariot 12 autour du duc-d'Albe 8 et d'absorber les tolérances de mise en oeuvre des ducs-d'Albe.

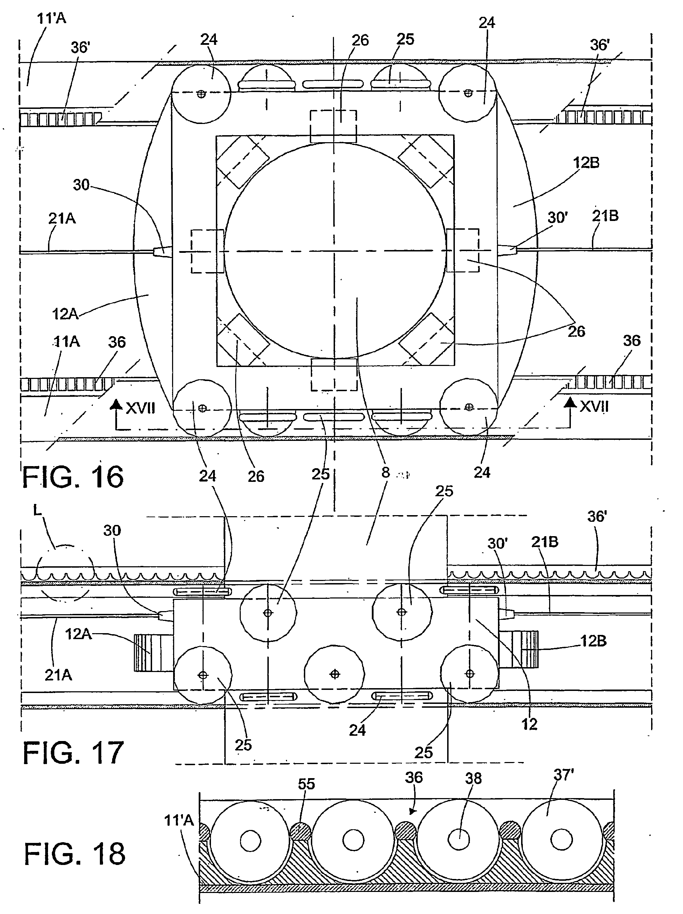

Le chariot 12 porte extérieurement en partie supérieure et du côté des rails, une structure métallique 53 qui porte les axes 23A et 23B d'enroulement des caillebotis 16A, 16B, lesdits axes étant disposés perpendiculairement aux rails de part et d'autre du chariot 12. La structure 53 porte également les axes de deux rouleaux 54, servant à clipser les caillebotis 16A, 16B sur des rails-crémaillères de clipsage 36, 36' disposés sur le dessus des rails 11A, 11'A. Les dents successives 55 des rails-crémaillères de clipsage 36 peuvent être mieux observées sur la Fig. 18. Elles maintiennent le caillebotis en place.

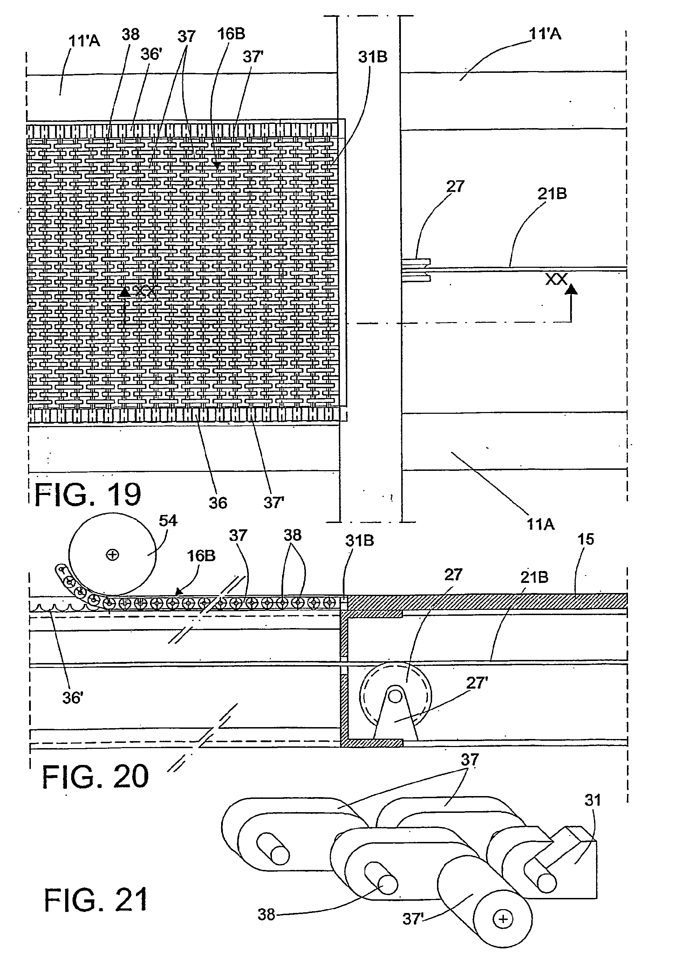

Les caillebotis sont constitués d'un ensemble de petites pièces allongées 37 (Fig. 21), disposées selon la longueur des rails 11A et 11'A. Ces pièces 37 sont délimitées par deux faces latérales opposées, de forme oblongue, disposées verticalement et en quinconce en position de montage. Chaque pièce 37 présente deux perçages transversaux perpendiculaires aux faces oblongues, les perçages en regard étant traversés par des axes 38. Il est ainsi constitué un tapis roulant de type chenille. Les extrémités des axes 38 sont équipées des petits cylindres de clipsage 37', clipsables dans les rails-crémaillères 36, 36'.

Le chariot 12, présente extérieurement au milieu de ses bords perpendiculaires aux rails et en partie supérieure, une mâchoire 30, 30', par exemple un embout de type Norseman, prenant un câble 21 (dont les deux brins partant du chariot sont désignés par 21A, 21B), qui passe sur des poulies 20A₁, 20B₁, d'axes verticaux, (poulie d'entraînement 20A₁ et poulie libre 20B₁), situées sous le platelage 15 au voisinage des extrémités respectives du système 7.

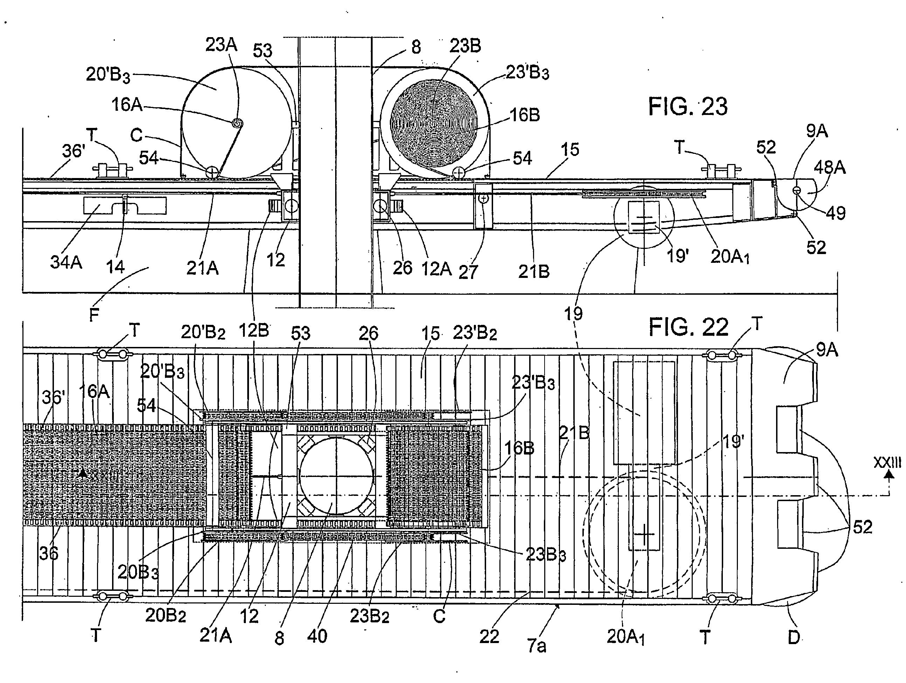

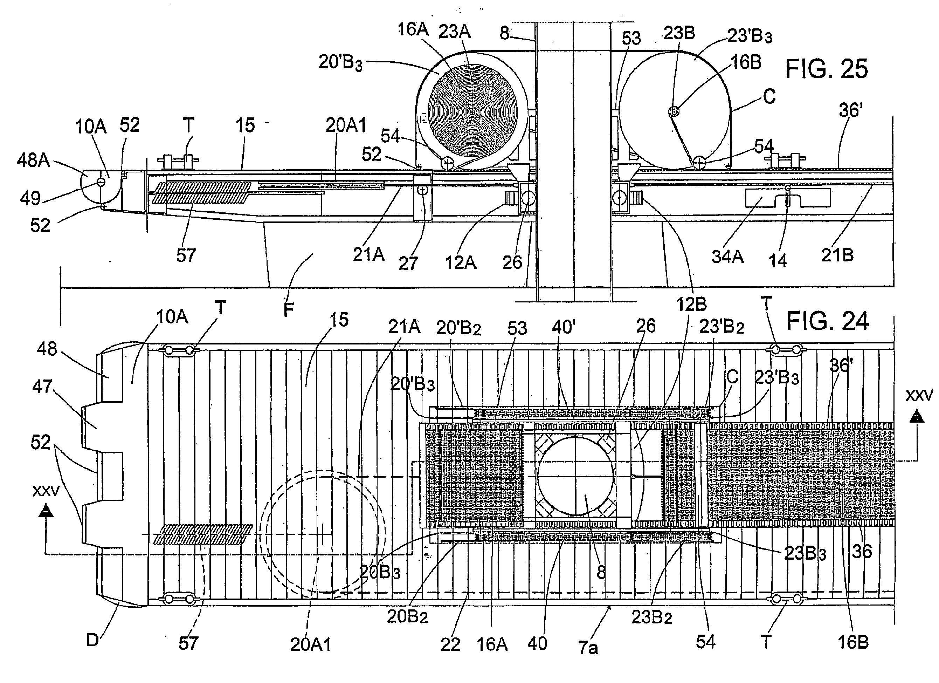

Sur les Fig. 22 et 23, on peut voir que la poulie 20A₁ est entraînée par un ensemble moteur/réducteur 19/19', et sur les Figures 24 et 25, on peut voir que la poulie libre 20B₁ est reliée à un ressort 57 pour amortir les forces de traction sur le câble 21 que les poulies entraînent.

Le câble 21, qui circule selon la ligne longitudinale moyenne de l'espace de circulation du duc-d'Albe 8, est supporté par les entretoises 14, celles-ci comportant à cet effet, sur leur longueur, des gaines tournantes 14a (Fig. 12 et 13). Le retour du câble 21, désigné par le chiffre de référence 22 (Fig. 8 et 14), circule à l'intérieur de la poutre 11B. Sur la Fig. 14, on peut voir que le retour de câble 22 est soutenu par des poulies folles 27, dont les axes sont portés par la poutre 11B. Sur la Figure 20, on peut voir, à l'extrémité du système, le câble 21 soutenu par une poulie 27 dont les axes sont portés par des oreilles 27' fixées à la structure inférieure du système 7.

Le caillebotis 16A, 16B, comme on peut le voir représenté Fig. 20, est fixé par des crochets de fixation de caillebotis respectivement 31A, 31B (désignés aussi par le chiffre 31) à la structure du platelage 15 aux deux extrémités du système mobile 7.

De part et d'autre du duc-d'Albe 8, comme déjà indiqué, chaque caillebotis 16A, 16B s'enroule ou se déroule autour de son axe 23A, 23B, les deux axes étant rendus solidaires par deux chaînes d'entraînement 40, qui s'enroulent autour du même moyeu que les caillebotis 16A et 16B, les enroulements des chaînes étant maintenus par des flasques internes (20B₃ ; 20'B₃- 23B₃ ; 23'B₃), et externes (20B₂ ; 20'B₂ - 23B₂ ; 23'B₂).

La disposition des caillebotis 16A, 16B et des chaînes 40, 40' sur les axes précités 23A, 23B est telle que le déroulement d'un caillebotis entraîne l'enroulement de la chaîne située sur le même axe, laquelle se déroule sur son autre axe entraînant à son tour l'enroulement de l'autre caillebotis de telle façon que la vitesse de déroulement et d'enroulement des deux caillebotis vienne en parfaite synchronisation. Le déroulement est commandé par la traction sur le câble 21, elle-même commandée par le moteur 19. La mise en marche du moteur 19 provoque la rotation de la poulie d'entraînement 20A₁, ce qui provoque une translation du câble 21, lequel, fixé au chariot 12, tire l'ensemble du système mobile flottant en translation, par rapport au duc-d'Albe fixe 8.

L'ensemble des deux axes 23A et 23B et des chaînes 40, 40' est recouvert par un capot C ; des palpeurs 52 fixés à la base du capot C permettent de stopper l'avancement du système si un objet ou un corps étranger vient se coincer entre le caillebotis et le capot, lors du mouvement de l'ensemble du système mobile se déplaçant par rapport au capot C.

La Fig. 10 est une vue de dessus montrant le chariot 12 et une entretoise 14 d'un système mobile 7, laquelle est du type « à bascule ». Les entretoises 14 sont aptes à basculer horizontalement au passage du chariot 12, poussées par ce dernier, et à reprendre leurs places sous l'action de vérins 35 après le passage du chariot 12, pour venir se verrouiller dans le rail opposé. Elles sont fixées à intervalles de façon alternée sur un rail et sur l'autre 11A, 11' A.

Sur la partie gauche de la Fig. 10, on peut voir le système 7 dont les rails 11A et 11'A sont maintenus par ces entretoises mobiles 14, qui sont basculantes autour de l'une de leurs extrémités 32 montées dans le rail alternativement 11A ou 11'A. Les extrémités libres 33 des entretoises 14, que l'on peut voir plus en détail sur les Fig. 12 et 13, portent une terminaison sous la forme d'.un petit cylindre de roulement monté libre sur un axe d'un côté de l'entretoise 14 et perpendiculairement à cette dernière.

Sur la partie gauche de la Fig. 11, on peut voir que des ouvertures ou boutonnières 34A sont pratiquées dans le rail 11'A, lesquelles présentent la forme générale d'un U renversé dont l'âme est parallèle au platelage 15 et dont les branches sont très larges pour permettre le passage de l'extrémité libre 33.

A l'arrière de ces ouvertures 34A, sont rapportés, pour fermer celles-ci et permettre le roulement des extrémités libres 33, des caissons circulaires 34, tels que représentés schématiquement sur les Fig. 12 et 13.

Sur la partie droite de la Fig. 10 (sur laquelle seuls le chariot 12 et les brins centraux 21A, 21B des câbles ont été représentés), on peut voir que les bords 12A, 12B dudit chariot 12, perpendiculaires aux rails 11A, 11'A, sont arrondis vers l'extérieur du chariot.

En fonctionnement, les entretoises 14 sont tour à tour amenées à heurter le bord 12A ou 12B en regard, ce qui provoque leur effacement par basculement ; la terminaison cylindrique verticale de l'extrémité 33 peut s'extraire du rail 11'A par l'une des branches verticales larges de l'ouverture en U inversé 34A. L'entretoise 14 vient alors basculer pour se placer parallèlement au rail 11A, comme représenté en traits mixtes sur la Figure 12.

Lorsque l'entretoise 14 n'est plus retenue par le chariot 12, elle est rappelée par un vérin 35 (Fig. 12 et 13) qui la replace dans sa position initiale pour maintenir l'écartement des deux rails 11A et 11'A, position dans laquelle la terminaison cylindrique de l'extrémité libre 33 est maintenue dans le caisson 34 par la partie horizontale de l'ouverture 34A, empêchant le rapprochement ou l'écartement des rails 11A et 11'A.

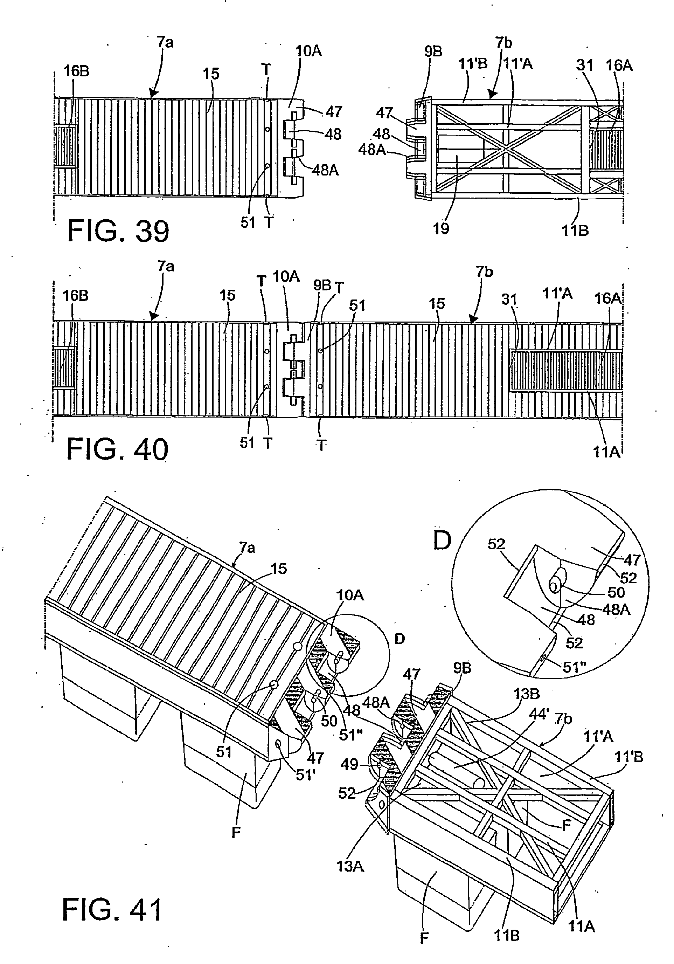

Sur la Fig. 8, qui est une vue en perspective du système 7, on a représenté l'extrémité d'accrochage 9 qui sera décrite plus en détail sur les Fig. 39 à 41. Celles-ci montrent en effet le raccordement entre eux de deux systèmes mobiles voisins 7a et 7b par leurs extrémités respectivement mâle 9B et femelle 10A.

L'extrémité mâle 9B porte des parties saillantes 47 qui coopèrent avec les parties creuses 48 de l'extrémité femelle 10A. Les faces latérales 48A des parties saillantes 47, délimitant les parties creuses 48, sont configurées pour permettre aux parties saillantes 47 de s'encastrer facilement dans les parties creuses 48, par une région d'entrée plus évasée. En effet, les systèmes mobiles 7a et 7b peuvent être amenés à se raccrocher dans un mouvement non parfaitement rectiligne en raison des mouvements du plan d'eau.

Les parties saillantes 47 de l'extrémité mâle 9B comportent un trou 49 horizontal perpendiculaire aux faces 48A. Les parties saillantes 47 de l'extrémité femelle 10A comportent pareillement chacune un trou horizontal recevant un penne 50 qui fait saillie hors des faces latérales 48A, qui est apte à sortir de son logement pour verrouiller mécaniquement et/ou électromagnétiquement les extrémités 9B et 10A des systèmes mobiles 7b et 7a, une fois la partie saillante 47 pénétrée dans la partie creuse 48.

Les faces avant des parties saillantes 47 et les fonds des parties creuses 48 sont de forme courbe, permettant aux systèmes accrochés de pivoter autour de l'axe-penne 50 afin que les systèmes mobiles 7 puissent suivre les mouvements du plan d'eau (Fig. 41).

L'extrémité mâle 9 des éléments mobiles est apte à se déplacer légèrement par glissement latéral, d'un côté ou de l'autre, mue par un moteur 44' (Figure 41) contrôlé par le guidage laser pour rattraper les tolérances d'alignement (mouvement du plan d'eau) de façon à permettre la parfaite imbrication de deux systèmes dans les derniers mètres avant leur verrouillage.

Un guidage laser 51" ou autre guidage lumineux favorise le bon alignement des deux extrémités 9 et 10 des systèmes 7 lors de leur rapprochement.

Des feux de signalisation 51 qui s'allument lors de la mise en mouvement des systèmes 7 pour prévenir les usagers, sont disposés aux extrémités 9 et 10 des systèmes 7 ainsi qu'au droit des raccordements 18A des tronçons de pannes 5.

Sur leurs bords latéraux, les extrémités 9B et 10A sont équipées de lumières de signalisation 51', classiquement vertes ou rouges, indiquant le passage aux bateaux manoeuvrant de nuit.

Pour des raisons de sécurité, les extrémités 9B et 10A peuvent être équipées de palpeurs 52, lesquels détectent la présence éventuelle d'un corps étranger au système lors de leur rapprochement et empêchant à ce moment l'accrochage des deux pontons pour éviter tout accident.

Les Fig. 36 à 38 montrent la réalisation du raccordement entre le système mobile de quai 107 et le ponton flottant fixe 3.

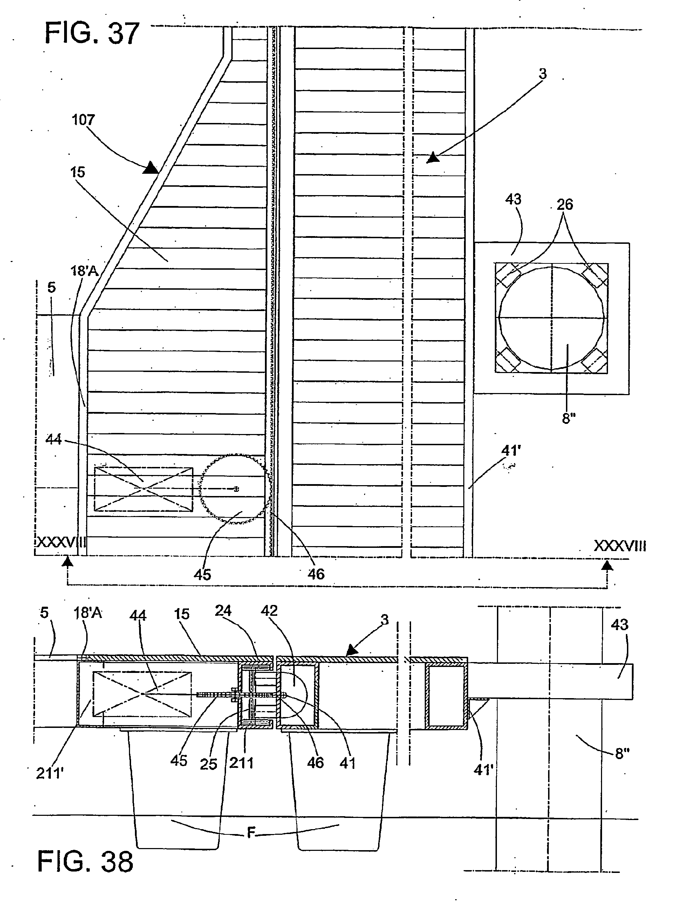

Dans ce mode de réalisation, le ponton flottant fixe 3 est fixé par l'intermédiaire de coulisseaux 43 classiques à une première série de ducs-d'Albe 8" située entre le quai fixe 1 et le ponton flottant classique 3. Le système mobile de quai 107 n'est pas traversé par un duc-d'Albe 8 et ne nécessite pas de système de caillebotis déroulable. Il comporte une poutre simple 211 faisant office de bras d'amarrage, disposée sur une série de flotteurs F ou portée par le ponton 3 et recouverte d'un platelage 15. La poutre 211 est équipée d'un rail-poutre partiellement refermé comme les rails-guides des chariots 12 des systèmes 7, ce rail-poutre circulant autour d'ensembles 42 comprenant des roues verticales 25 et horizontales 24. Ces ensembles 42 sont fixés à intervalles réguliers sur le flanc du ponton fixe 3 grâce à des fixations articulées 41 pour s'adapter aux mouvements du plan d'eau (Figure 38). Le déplacement des systèmes 107 dits de tête latéralement au ponton fixe 3 est assuré par une ou des roues crantées 45 coopérant avec un rail à crans crémaillères 46 fixé sur le ponton 3. Le système mobile de quai 107 est équipé en son centre, d'un moteur 44, qui est disposé sous son platelage 15 et qui, pour sa mise en mouvement, entraîne la roue crantée 45, coopérant avec le rail à crans crémaillères 46 situé sur le flanc du ponton 3.

La Fig. 36 montre à plus petite échelle l'ensemble constitué par le système mobile de quai 107 et le ponton flottant classique 3, au niveau de la jonction avec le tronçon de panne 5 et ses raccordements d'extrémités 9' et 10'. Ces extrémités 9' et 10' correspondent à des moitiés d'extrémités 9 et 10 des systèmes 7.

Les moteurs de déplacement (19 : 44) et les moyens de verrouillage et déverrouillage (9-10 ; 9'-10') des extrémités des systèmes (7-207 ; 107) sont commandés simultanément par panne ou par groupe de pannes selon les besoins, par tous moyens adaptés, notamment centralisés, informatisés.

On pourra ainsi prévoir un pupitre superviseur de commande avec écran dans la Capitainerie du port (S1; Fig. 42) permettant au personnel responsable d'exécuter des manoeuvres d'ouvertures en fonction des demandes (par téléphone ou radio) des usagers désirant entrer ou sortir, une programmation des commandes d'ouvertures et de fermetures de chacune des pannes à heures fixes pouvant ainsi être envisagée. Des armoires secondaires (A1, A2, A3, etc.) pourront aussi être utilisées (voir Figure 42) pour regrouper les commandes et automatismes de chaque panne et comportant les dispositifs d'arrêt d'urgence au droit de chaque panne sur le ponton fixe 3 ou quai 1.

Egalement, on peut envisager une automatisation des commandes à la demande des usagers directement à partir du quai 1 ou ponton 3, de telles commandes étant alors de type avec monnayeur ou cartes.

Des ouvertures d'urgence de pannes seront prévues en cas d'incendie pour éviter la propagation du feu et des moyens d'extinction seront positionnés sur les pannes, le personnel pouvant circuler transversalement sur les éléments 7 pour arriver plus rapidement sur le lieu de l'incendie.

En cas de panne d'un élément moteur ou mécanique de l'un des systèmes 7, 207, 107, il sera possible de débrayer l'élément défectueux, l'ensemble du système de l'invention continuant à fonctionner grâce au remorquage du système défectueux par les autres éléments mobiles 7, 207, 107 dans l'attente de l'intervention de la maintenance.

L'exposé détaillé des moyens de l'invention permet de comprendre le fonctionnement du bassin portuaire équipé de ces moyens, par la manoeuvre d'une panne ou d'un groupe de pannes adjacentes reliées entre elles par les extrémités des systèmes de l'invention. Un important gain de place pour l'amarrage des bateaux est ainsi offert.

On ajoutera qu'avec l'ensemble d'amarrage selon la présente invention, l'amarrage des bateaux se fait uniquement sur les tronçons de panne 5 et, à couple, sur les bras d'amarrage 6 et les extrémités des systèmes mobiles flottants 7.

Comme évoqué, les systèmes 7 rendent avantageusement possibles les liaisons transversales pour un déplacement facile des usagers d'une panne à l'autre.

On va maintenant décrire différentes variantes possibles de la réalisation qui vient d'être décrite.

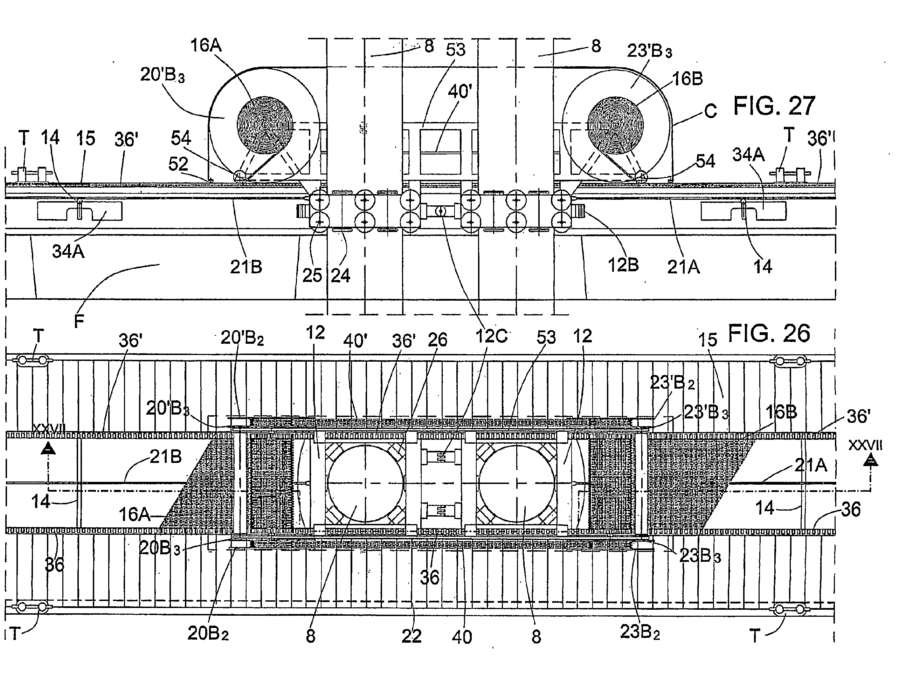

Les Fig. 26 et 27 présentent une variante du premier mode de réalisation des Fig. 24 et 25, suivant laquelle le système est guidé par deux ducs-d'Albe 8 jumelés au lieu d'un, pour une meilleure tenue (sites plus exposés aux intempéries ou destinés à accueillir des bateaux plus grands). Chaque duc-d'Albe 8 comporte son chariot 12, les deux chariots étant reliés par un dispositif articulé de liaison 12C qui autorise un mouvement relatif entre les deux chariots 12. Chaque extrémité du câble de traction 21A, 21B est fixée à l'un des chariots 12.

La structure de support 53 des enroulements de caillebotis 16A, 16B est adaptée aux deux chariots 12. De plus, le capot C est allongé pour recouvrir l'ensemble du mécanisme ; il a deux ouvertures en partie supérieure pour laisser passer les têtes des ducs-d'Albe 8.

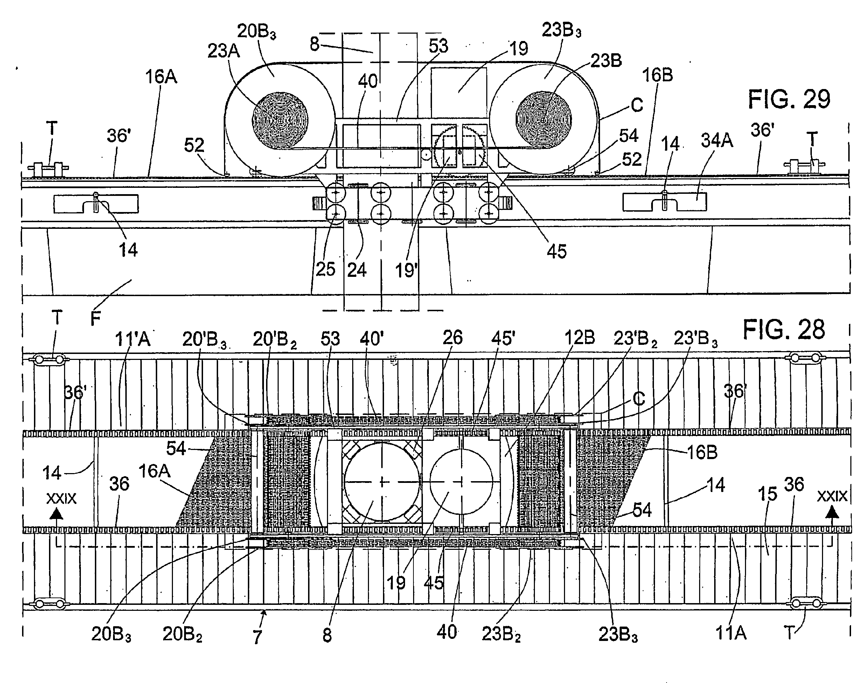

Les Fig. 28 et 29 présentent un deuxième mode de réalisation du dispositif de déplacement des systèmes 7, 207 suivant lequel il n'est pas utilisé de câble de traction. Un moteur 19 est embarqué sur la structure support 53 solidaire du chariot 12 ; ce moteur 19, par l'intermédiaire d'un réducteur 19', actionne deux roues dentées latérales 45, 45' qui s'engrènent chacune sur un rail-crémaillère 36, 36' de clipsage des caillebotis, du type de celui décrit avec référence au premier mode de réalisation. La mise en marche du moteur 19 provoque la rotation des roues 45, 45', lesquelles, par entraînement des rails-crémaillères 36, 36' associés, déplacent le système 7.

Un système permettant le déploiement et le repli du câble d'alimentation du moteur 19 sera avantageusement prévu dans le cas de ce mode de réalisation.

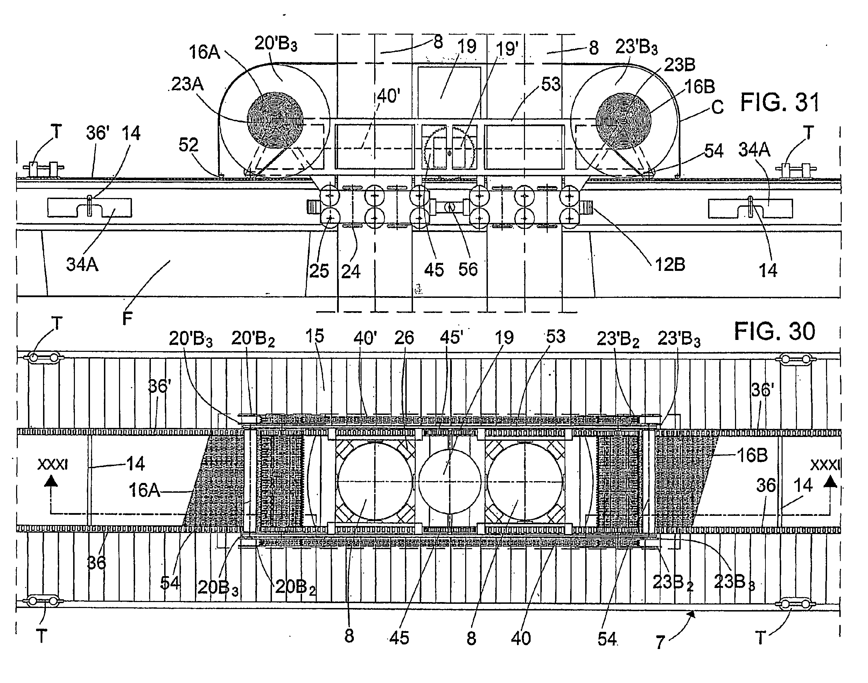

Les Fig. 30 et 31 montrent ce deuxième mode de réalisation, avec la variante à deux ducs-d'Albe comme celle des Fig. 26-27. Dans ce cas, le moteur 19 est avantageusement disposé entre les deux ducs-d'Albe 8.

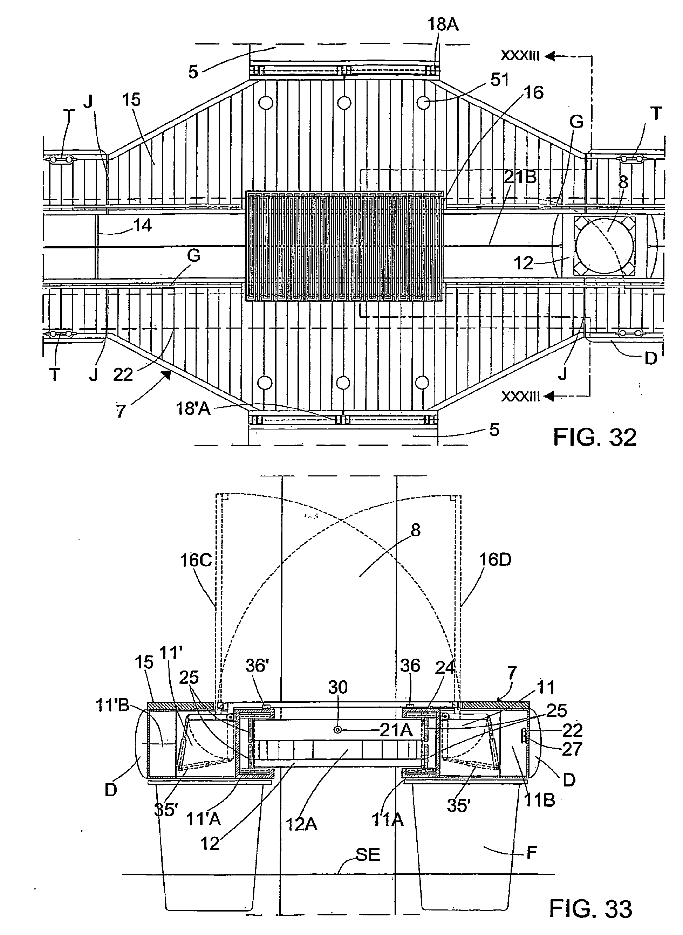

Les Fig. 32 et 33 représentent une variante de protection de l'ouverture centrale des systèmes 7, 207 suivant laquelle des caillebotis déroulables ne sont plus utilisés. En revanche, la protection est assurée par un garde-corps G disposé tout autour de la zone de translation du duc-d'Albe 8 à l'intérieur du système 7. Une zone de passage, dans l'axe des tronçons de pannes 5, est aménagée grâce à une passerelle relevable 16, constituée par exemple par des éléments imbricables 16C, 16D (Fig. 4, 33 et 34) servant, en position rabattue, également au maintien d'écartement entre les rails 11A et 11'B, leurs extrémités étant adaptées à cet effet, et, en position relevée, assurant la continuité des garde-corps G.

Sur la Figure 33, on a désigné par SE le niveau de la surface de l'eau.

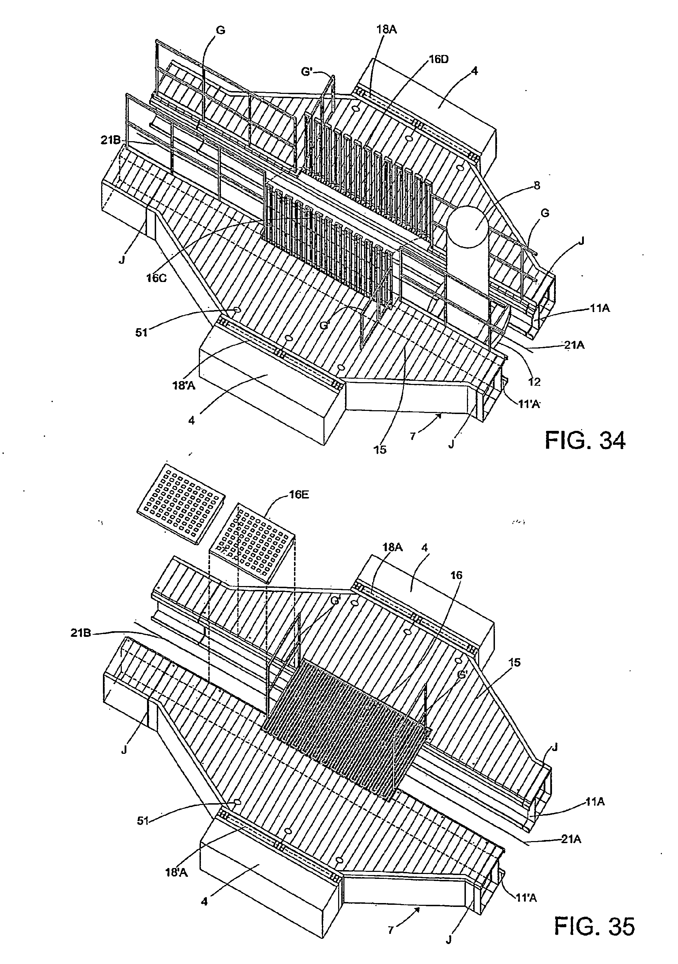

La passerelle 16 passe d'une position fermée (Fig. 35) à une position ouverte (Fig. 34) lors du déplacement du système 7, 207 au niveau du duc-d'Albe 8. Les deux parties 16C, 16D de la passerelle 16 sont actionnées par des vérins de relevage 35' (Fig. 33).

Pour pouvoir protéger les deux côtés de la passerelle 16 en position rabattue (Fig.35), les éléments d'extrémité opposés de chaque passerelle 16C, 16D comportent un garde-corps G' en retour.

Sur la Fig. 35, on a représenté des caillebotis amovibles 16E qui sont destinés à fermer l'ouverture entre les deux rails 11A, 11'A lors de manifestations telles que salons à flots, expositions nautiques, etc. Dans ces cas, les systèmes 7 sont désactivés et les garde-corps G , avantageusement amovibles, sont démontés.

Il est du reste bien entendu que les modes de réalisation qui ont été décrits ci-dessus ont été donnés à titre indicatif et non limitatif et que des modifications peuvent être apportées sans que l'on s'écarte pour autant du cadre de la présenter invention. C'est ainsi notamment que le mécanisme permettant le déplacement du système mobile flottant pourra aussi être assuré par :
- un déplacement engendré par la rotation à l'intérieur des deux rails guides de vis sans fin, également actionnées par un moteur électrique, situé dans une des extrémités de chaque système mobile flottant ;
- un déplacement par vérins télescopiques hydrauliques ;
- un déplacement par l'inversion du sens de rotation d'hélices placées au droit des flotteurs des parties centrales, assurant les mouvements dans un sens ou dans l'autre des éléments ; la rotation de ces hélices, escamotables de l'eau en période de non utilisation, serait également assurée par des moteurs électriques ; ou
- la rotation de roues à aube situées sous les pièces d'assemblage à chaque extrémité des systèmes flottants.

On pourrait également envisager un enroulement des caillebotis 16A, 16B non plus au voisinage des chariots mais à l'extrémité respective du système mobile flottant de l'invention, sous le platelage de celui-ci, des systèmes de chaînes de synchronisation étant maintenus en partie centrale.

Egalement, les entretoises 14 pourraient être agencées pour coulisser parallèlement à elles-mêmes à une extrémité du système mobile flottant.

## Revendications

1. - Ensemble de systèmes mobiles flottants motorisés (7 ; 107 ; 207) pour le déplacement de pannes (4A à 4E) d'amarrage de bateaux B et embarcations dans des bassins portuaires P, afin de déplacer lesdites pannes (4A à 4E) en translation selon une trajectoire perpendiculaire à celles-ci, de telle sorte qu'un espace de manoeuvre des bateaux B et embarcations puisse être pratiqué entre au moins deux pannes adjacentes (4 ; 4A à 4E), alors que les autres espaces entre pannes sont fermés à la manoeuvre, chaque système comportant :
- des moyens de fixation de pannes ou de tronçons de pannes (5), lesdites pannes ou lesdits tronçons de pannes étant disposés perpendiculairement à la direction de translation ;
- à ses deux extrémités, des moyens (9, 10) permettant son accrochage sur un système identique en vis-à-vis ou sur un moyen d'accrochage situé en extrémité d'un quai ou panne fixe ;
- des moyens de guidage en translation, parallèlement à un quai ou ponton principal, par rapport à un point fixe que constitue un pieu ou duc-d'Albe (8) ou groupe de pieux ou ducs-d'Albe fichés dans le fond du bassin, lesdits points fixes dudit ensemble étant destinés à être positionnés suivant un quadrillage régulier dont les axes sont perpendiculaires et parallèles audit quai ou ponton principal et qui présente une dimension de maille appropriée pour permettre les manoeuvres précitées d'une panne ou d'un groupe de pannes adjacentes accrochées par leurs extrémités, des systèmes (107) pouvant être guidés par un ponton fixe (3) ; et
- des moyens d'entraînement en translation des pannes, lesdits moyens d'entraînement dudit ensemble étant commandés par des moyens de commande synchronisés des manoeuvres précitées,
**caractérisé par le fait que** les systèmes sont agencés pour qu'en position d'arrêt, ils soient toujours, à une extrémité, en butée sur un pieu ou duc-d'Albe (8) et, à l'autre, verrouillés sur l'extrémité d'un système identique en vis-à-vis ou d'une extrémité d'un ponton ou quai fixe, les extrémités dudit système identique ou dudit ponton fixe étant elles-mêmes en butée sur un autre pieu ou duc-d'Albe (8).

2. - Ensemble selon la revendication 1, **caractérisé par le fait que** les extrémités des systèmes mobiles flottants portent des moyens d'amarrage de façon à constituer des bras d'amarrage.

3. - Ensemble selon l'une des revendications 1 à 2, **caractérisé par le fait que** les moyens (9, 10) prévus pour accrocher et décrocher deux pannes adjacentes sont agencés pour assurer une liaison adaptée pour résister aux mauvaises conditions météorologiques et pour suivre les mouvements de l'eau et des marées.

4. - Ensemble selon l'une des revendications 1 à 3, **caractérisé par le fait que** les moyens de guidage d'un système mobile flottant sont constitués par un chariot (12) entourant un duc-d'Albe (8) formant coulisseau apte à monter et à descendre le long du duc-d'Albe (8) pour suivre le mouvement de l'eau ou des marées, ledit chariot comportant extérieurement des organes de roulement (24,25) apte à coopérer avec des rails (11A, 11'A) du système mobile flottant.

5. - Ensemble selon la revendication 4, **caractérisé par le fait que** chaque système mobile flottant (7) est entraîné par au moins un câble (21) raccordé au chariot (12) aux deux bords (12A, 12B) opposés de celui-ci perpendiculaires à des rails (11A, 11'A), et susceptibles d'être tracté par un moteur (19) de telle sorte que la traction d'un câble lié à un bord permet le coulissement de la structure mobile flottante en sens inverse de la traction exercée par le câble.

6. - Ensemble selon la revendication 4, **caractérisé par le fait qu'**un moteur (19) embarqué sur le chariot (12) met en mouvement une ou des roues crantées (45) qui circulent sur un ou deux rails-crémaillères (36), de telle sorte que ce mouvement entraîne le déplacement du système mobile flottant dans un sens ou dans l'autre.

7. - Ensemble selon l'une des revendications 4 à 6, **caractérisé par le fait qu'**un système mobile flottant comporte une structure de support allongée avec deux poutres (11, 11') en regard portant intérieurement les rails (11A, 11'A) destinés à coopérer avec les organes de roulement (24, 25) du chariot (12) du duc-d'Albe (8), lesdites poutres (11, 11') étant réunies à leurs extrémités par des structures de liaison (13B, 13C), lesdites poutres et, le cas échéant, les structures de liaison étant portées par au moins un dispositif de flottaison (F, F1), des moyens (18, 18') étant portés par lesdites poutres permettant leur raccordement à la panne ou aux tronçons de panne, avec renforcement éventuel au droit dudit raccordement par des vérins de triangulation (17), les extrémités de ladite structure présentant les moyens d'accrochage complémentaires de moyens portés par la structure du système mobile flottant adjacent, afin de constituer des trains de systèmes mobiles flottants dans les positions accrochées des systèmes concernés.

8. - Ensemble selon la revendication 7, **caractérisé par le fait que** les deux espaces entre les deux rails (11A, 11'A) de part et d'autre du chariot (12) associé au duc-d'Albe (8) sont fermés par un caillebotis (16A, 16B) qui s'enroule et se déroule de part et d'autre du chariot en fonction du déplacement du système mobile flottant par rapport au duc-d'Albe (8), un platelage circulable (15) venant recouvrir la structure autour du caillebotis.

9. - Ensemble selon la revendication 8, **caractérisé par le fait que** des moyens sont prévus pour permettre l'enroulement ou le déroulement de l'un des caillebotis à une vitesse dépendant du déroulement ou de l'enroulement de l'autre caillebotis.

10. - Ensemble selon la revendication 9, **caractérisé par le fait que** les moyens d'enroulement/déroulement d'un caillebotis par rapport à l'autre consistent en au moins une chaîne (40) de longueur et d'épaisseur proportionnelles respectivement à la longueur et à l'épaisseur du caillebotis enroulable et montée pour s'enrouler autour de l'axe d'enroulement du premier caillebotis dans le sens inverse de celui-ci et sur l'axe parallèle du second caillebotis également dans le sens inverse de ce dernier, de telle sorte que, lorsque le premier caillebotis est entièrement enroulé sur son axe, la chaîne (40) est complètement déroulée sur ce même axe et complètement enroulée sur ledit second axe, alors que le deuxième caillebotis est entièrement déroulé, ladite chaîne étant entraînée par le déroulement du premier caillebotis, lui-même entraîné par le moteur déplaçant la structure.

11. - Ensemble selon la revendication 7, **caractérisé par le fait que** la protection de l'ouverture centrale des systèmes est assurée par un garde-corps (G) positionné autour de la zone de translation du duc-d'Albe(8), une zone de passage dans l'axe des tronçons de pannes étant aménagée grâce à une passerelle relevable (16C, 16D).

12. - Ensemble selon l'une des revendications 7 à 11, **caractérisé par le fait qu'**entre les deux rails (11A, 11A'), sont disposées des entretoises (14) de maintien d'écartement, lesdites entretoises étant agencées pour s'effacer lorsque le déplacement de la structure les amène au voisinage du bord (12A, 12B) du chariot et pouvant servir de support à un câble tracteur.

13. - Ensemble selon l'une des revendications 1 à 12, **caractérisé par le fait que** chaque panne comporte plusieurs tronçons de pontons d'amarrage raccordés aux systèmes mobiles flottants (7a, 7b, 7c, 7d), étant complétée par un système mobile flottant (107a, 107b, 107c, 107d) dit de quai adapté pour coulisser le long d'un ponton flottant fixe (3) classique et par un système mobile flottant dit de tête (207a, 207b, 207c, 207d) situé à l'extrémité opposée de la panne côté accès des bateaux et pouvant servir de ponton d'attente.

14. - Ensemble selon l'une des revendications 1 à 10, **caractérisé par le fait que** le raccordement entre les pannes ou tronçons de pannes et les systèmes mobiles s'effectue à un niveau choisi pour permettre, de part et d'autre de la panne, deux longueurs égales ou différentes, suivant les besoins, d'emplacement pour les bateaux B et embarcations.

15. - Ensemble selon l'une des revendications 4 à 14, **caractérisé par le fait que** chaque point fixe est formé par plusieurs ducs-d'Albe dont les chariots associés sont reliés par un dispositif articulé de liaison.

16. - Installation portuaire comportant un ensemble de systèmes mobiles flottants motorisés tels que définis à l'une des revendications 1 à 15.

## Claims

1. - Arrangement of motorised floating mobile systems (7 ; 107 ; 207) for moving mooring booms (4A to 4E) of boats B and floating vessels in inner harbours P, in order to translationally move said booms (4A to 4E) along a trajectory perpendicular thereto, in such a way that a manoeuvring space of boats B and floating vessels can be provided between at least two adjacent booms (4 ; 4A to 4E), whereas the other spaces between booms are closed for manoeuvring, each system including :
- means (5) for fixing booms or sections thereof, said booms or sections thereof being disposed in a direction perpendicular to the translation direction ;
- means (9, 10) which are arranged on the two ends of the system and enable said system to be attached to a facing identical system or to attaching means arranged on the end of a pier or a fixed boom ;
- means for translationally guiding, in a direction parallel to a pier or a main pontoon, with respect to a fixed point consisting of a pile or dolphin (8) or group of piles or dolphins driven into the bottom of the inner harbour, said fixed points of said arrangement being provided to be positioned following a regular grid pattern whose axes are perpendicular and parallel to said pier or main pontoon and which has a mesh size suitable to allow the abovementioned manoeuvring of a boom or a group of adjacent booms attached by their ends, with some systems (107) being adapted to be guided by a fixed pontoon (3) ; and
- translation driving means of the booms, said arrangement driving means being controlled by means for synchronously controlling said manoeuvring,
**characterized in that** the systems are arranged so that in a stop position, they are always, at one end, in abutment with a pile or dolphin (8), and, at the other, locked on the end of a facing identical system or on the end of a pontoon or fixed pier, the ends of said identical system or said fixed pontoon being themselves in abutment with another pile or dolphin (8).

2. - Arrangement according to claim 1, **characterized in that** the ends of the floating mobile systems support mooring means so as to form mooring arms.

3. - Arrangement according to claim 1 or 2, **characterized in that** the means (9, 10) provided for attaching and disconnecting two adjacent booms are arranged to ensure a link adapted to withstand bad weather conditions and follow water movements and the tides.

4. - Arrangement according to anyone of claims 1 to 3, **characterized in that** the means for translationally guiding a floating mobile system consists of a carriage (12) surrounding a dolphin (8) forming a slide adapted to go up and down along the dolphin (8) to follow water movements or the tides, said carriage externally comprising rolling devices (24, 25) adapted to cooperate with rails (11A, 11'A) of the floating mobile system.

5. - Arrangement according to claim 4, **characterized in that** each floating mobile system (7) is driven by at least one cable (21) connected to the carriage (12) at both opposite edges (12A, 12B) thereof perpendicular to rails (11A, 11'A), and adapted to be drawn by a motor (19) so that the traction of a cable connected to one edge allows the floating mobile structure to slide in the direction opposite to the traction exerted by the cable.

6. - Arrangement according to claim 4, **characterized in that** a motor (19) embedded on the carriage (12) puts in motion one or more toothed wheels (45) which move on one or two rack-rails (36), so that this movement involves the displacement of the floating mobile system in one direction or in the other.

7. - Arrangement according to anyone of claims 4 to 6, **characterized in that** a floating mobile system includes an elongated support structure with two facing beams (11, 11') carrying internally the rails (11A, 11'A) adapted to cooperate with the rolling devices (24, 25) of the carriage (12) of the dolphin (8), said beams (11, 11') being linked at their ends by bonding structures (13B, 13C), said beams and, when applicable, the bonding structures being supported by at least a flotation device (F, F1), means (18, 18') being provided by said beams allowing their connection to the boom or boom sections, with possible reinforcement uprightly from said connection by triangulation rams (17), the ends of said structure having attaching means complementary to means supported by the structure of the adjacent floating mobile system, in order to constitute trains of floating mobile systems in the attached positions of the systems concerned.

8. - Arrangement according to claim 7, **characterized in that** the two spaces between the two rails (11A, 11'A) from either side of the carriage (12) associated with the dolphin (8) are closed by a grating (16A, 16B) which winds and unwinds from either side of the carriage depending on the displacement of the floating mobile system with respect to the dolphin (8), a flooring (15) allowing the users float traffic covering the structure around the grating.

9. - Arrangement according to claim 8, **characterized in that** means are provided to allow the winding or the unwinding of one of the gratings at a speed depending on the unwinding or the winding of the other grating.

10. - Arrangement according to claim 9, **characterized in that** the winding/unwinding means of a grating with respect to the other consist of at least one chain (40) whose length and thickness are proportional respectively to the length and thickness of the windable grating and mounted to wind around the winding axis of the first grating in a direction opposite to the winding direction thereof and on the parallel axis of the second grating also in the direction opposite to the winding direction thereof, so that, when the first grating is fully wound on its axis, the chain (40) is completely unwound on this same axis and is completely wound on said second axis, whereas the second grating is completely unwound, said chain being driven by the unwinding of the first grating, itself driven by the motor moving the structure.

11. - Arrangement according to claim 7, **characterized in that** the protection of the central opening of the systems is provided by a guardrail (G) positioned around the translation area of the dolphin (8), a passage area in the axis of the boom sections being arranged by a liftable walkway (16C, 16D).

12. - Arrangement according to anyone of claims 7 to 11, **characterized in that** between the two rails (11A, 11'A), are disposed space maintaining braces (14), said braces being arranged to disappear when the displacement of the structure leads them in the vicinity of the carriage edges (12A, 12B) and being adapted to be used as a support to a traction cable.

13. - Arrangement according to anyone of claims 1 to 12, **characterized in that** each boom comprises several mooring pontoon sections connected to the floating mobile systems (7a, 7b, 7c, 7d), being completed by a floating mobile system (107a, 107b, 107c, 107d) named pier system adapted to slide along a conventional fixed floating pontoon (3) and by a floating mobile system named head system (207a, 207b, 207c, 207d) located at the opposite end of the boom, on the boat access side, and being adapted to be used as a waiting pontoon.

14. - Arrangement according to anyone of claims 1 to 10, **characterized in that** the connection between the booms or boom sections and the mobile systems is performed at a level selected to allow, on either side of the boom, two equal or different lengths, depending on the needs, of location for the boats B and floating vessels.

15. - Arrangement according to anyone of claims 4 to 14, **characterized in that** each fixed point is formed by several dolphins whose associated carriages are connected by a hinged bonding device.

16. - Port installation comprising an arrangement of motorised floating mobile systems as defined in anyone of claims 1 to 15.

## Patentansprüche

1. - Gesamtheit von schwimmenden beweglichen Systemen mit Antrieb (7 ; 107 ; 207) zum Bewegen von Stegen (4A bis 4E) zum Festmachen von Booten B und Wasserfahrzeugen in Hafenbecken P, um die Stege (4A bis 4E) durch Verfahren auf einer Bahn senkrecht zu diesen zu verfahren, so dass ein Manövrierplatz der Boote B und Wasserfahrzeuge zwischen mindestens zwei nebeneinander liegenden Stegen (4 ; 4A bis 4E) vorgesehen werden kann, während die anderen Plätze zwischen den Stegen zum Manövrieren geschlossen sind, wobei jedes System Folgendes umfasst:
- Mittel zur Befestigung von Stegen oder Stegabschnitten (5), wobei die Stege und Stegabschnitte senkrecht zur Verfahrrichtung angeordnet sind;
- an ihren beiden Enden Mittel (9, 10), die ihr Befestigen an einem gegenüberliegenden identischen System oder an einem am Ende eines Kais oder festen Stegs angeordneten Befestigungsmittel ermöglichen;
- Mittel zum Führen beim Verfahren, parallel zu einem Kai oder Hauptponton, gegenüber einem festen Punkt, der einen Pfahl oder eine Duckdalbe (8) oder eine Gruppe von Pfählen oder Duckdalben, die im Boden des Beckens befestigt sind, darstellt, wobei die festen Punkte der Gesamtheit zum Positionieren in einem regelmäßigen Liniengitter bestimmt sind, dessen Achsen senkrecht und parallel zum Kai oder Hauptponton sind und das eine entsprechende Rastergröße aufweist, um die genannten Manöver eines Stegs oder einer Gruppe von nebeneinander liegenden Stegen, die an ihren Enden befestigt sind, zu ermöglichen, wobei Systeme (107) durch einen festen Ponton (3) geführt werden können; und
- Mittel zum Verfahren der Stege mit Antrieb, wobei die Antriebsmittel der Gesamtheit durch synchronisierte Steuermittel der Manöver gesteuert werden,
**dadurch gekennzeichnet, dass** die Systeme so angeordnet sind, dass sie sich in Stoppstellung stets an einem Ende am Anschlag mit einem Pfahl oder einer Duckdalbe (8) und am anderen Ende am Ende eines identischen gegenüberliegenden Systems oder an einem Ende eines Pontons oder festen Kais verriegelt sind, wobei sich die Enden des identischen Systems oder des festen Pontons selbst am Anschlag mit einem anderen Pfahl oder einer Duckdalbe (8) befinden.

2. - Gesamtheit nach Anspruch 1, **dadurch gekennzeichnet, dass** die Enden der schwimmenden beweglichen Systeme Mittel zum Vertäuen aufweisen, die Ausleger darstellen.

3. - Gesamtheit nach einem der Ansprüche 1 bis 2, **dadurch gekennzeichnet, dass** die zum Befestigen und Lösen von zwei nebeneinander liegenden Stegen vorgesehenen Mittel (9, 10) so angeordnet sind, dass sie eine entsprechende Verbindung gewährleisten, die widrigen meteorologischen Bedingungen standhält und den Bewegungen von Wasser und Gezeiten folgt.

4. - Gesamtheit nach einem der Ansprüche 1 bis 3, **dadurch gekennzeichnet, dass** die Mittel zum Führen eines schwimmenden beweglichen Systems durch einen eine Duckdalbe (8) umgebenden Wagen (12) dargestellt sind, der eine Führung bildet, die sich entlang der Duckdalbe (8) nach oben und unten bewegen kann, um die Bewegung des Wassers oder der Gezeiten zu folgen, wobei der Wagen außen Rollvorrichtungen (24, 25) aufweist, die mit Schienen (11A, 11'A) des schwimmenden beweglichen Systems zusammenwirken können.

5. - Gesamtheit nach Anspruch 4, **dadurch gekennzeichnet, dass** jedes schwimmende bewegliche System (7) von mindestens einem Seil (21) angetrieben wird, das am Wagen (12) an den zwei Rändern (12A, 12B) gegenüber von diesem senkrecht zu Schienen (11A, 11'A) befestigt ist, und von einem Motor (19) gezogen werden kann, so dass der Zug eines mit einem Rand verbundenen Seils das Verschieben der schwimmenden beweglichen Struktur in entgegengesetzter Richtung zum vom Seil ausgeübten Zug ermöglicht.

6. - Gesamtheit nach Anspruch 4, **dadurch gekennzeichnet, dass** ein auf dem Wagen (12) angebrachter Motor (19) ein Zahnrad oder Zahnräder (45) in Bewegung setzt, die auf einer oder zwei Zahnstangenschienen (36) laufen, so dass diese Bewegung das Bewegen des schwimmenden beweglichen Systems in die eine oder andere Richtung bewirkt.

7. - Gesamtheit nach einer Ansprüche 4 bis 6, **dadurch gekennzeichnet, dass** ein schwimmendes bewegliches System eine längliche Stützstruktur mit zwei Trägern (11, 11') gegenüber umfasst, die innen die Schienen (11A, 11'A) aufnimmt, die zum Zusammenwirken mit den Rollvorrichtungen (24, 25) des Wagens (12) der Duckdalbe (8) bestimmt sind, wobei die Träger (11, 11') an ihren Enden durch Verbindungsstrukturen (13B, 13C) verbunden sind, die Träger und ggf. die Verbindungsstrukturen durch mindestens eine Schwimmvorrichtung (F, F1) getragen werden, Mittel (18, 18') umfasst, die durch die Träger getragen werden, was ihr Anschluss an den Steg oder die Stegabschnitte ermöglicht, ggf. mit Verstärkung direkt an der Verbindung durch Triangulationszylinder (17), wobei die Enden der Struktur zusätzliche Mittel zum Befestigen an der von der Struktur des angrenzenden schwimmenden beweglichen Systems getragenen Mittel aufweisen, um Reihen von in den befestigten Positionen der jeweiligen Systeme schwimmenden beweglichen Systeme darzustellen.

8. - Gesamtheit nach Anspruch 7, **dadurch gekennzeichnet, dass** die zwei Plätze zwischen den zwei Schienen (11A, 11'A) an beiden Seiten des mit der Duckdalbe (8) verknüpften Wagens (12) durch einen Rost (16A, 16B) verschlossen werden, der sich an beiden Seiten des Wagens je nach Bewegung des schwimmenden beweglichen Systems zur Duckdalbe (8) einrollt und ausrollt, wobei ein verfahrbarer Belag (15) die Struktur rund um den Rost abdeckt.

9. - Gesamtheit nach Anspruch 8, **dadurch gekennzeichnet, dass** Mittel vorgesehen sind, um das Einrollen oder Ausrollen von einem der Roste mit einer vom Ausrollen oder Einrollen des anderen Rosts abhängigen Geschwindigkeit zu ermöglichen.

10. - Gesamtheit nach Anspruch 9, **dadurch gekennzeichnet, dass** die Mittel zum Einrollen/Ausrollen eines Rosts entsprechend dem anderen aus mindestens einer Kette (40) mit einer jeweils der Länge und Stärke des einrollbaren Rosts entsprechenden Länge und Stärke, die montiert ist, um sich um die Einrollachse des erstens Rosts in entgegengesetzter Richtung zu dieser und auf der Achse parallel zum zweiten Rost ebenfalls in entgegengesetzter Richtung zu letzterem zu rollen, so dass, wenn der erste Rost vollständig auf seiner Achse eingerollt ist, die Kette (40) vollständig auf der gleichen Achse abgerollt und auf der zweiten Achse vollständig eingerollt ist, während der zweite Rost vollständig abgerollt ist, wobei die Kette vom Abrollen des ersten Rosts angetrieben wird, der wiederum vom Motor zum Bewegen der Struktur angetrieben wird.

11. - Gesamtheit nach Anspruch 7, **dadurch gekennzeichnet, dass** der Schutz der mittleren Öffnung der Systeme durch ein Geländer (G) gewährleistet wird, das rund um die Verfahrzone der Duckdalbe (8) angeordnet ist, wobei eine Passierzone in der Achse der Stegabschnitte durch einen hochklappbaren Laufsteg (16C, 16D) angeordnet ist.

12. - Gesamtheit nach einem der Ansprüche 7 bis 11, **dadurch gekennzeichnet, dass** zwischen den zwei Schienen (11A, 11A') Traversen (14) zum Halten von Abstand angeordnet sind, wobei die Traversen so angebracht sind, dass sie sich überdecken, wenn das Bewegen der Struktur diese in Nähe des Rands (12A, 12B) des Wagens bringt, und für ein Zugseil als Halterung dienen können.

13. - Gesamtheit nach einem der Ansprüche 1 bis 12, **dadurch gekennzeichnet, dass** jeder Steg mehrere Anlegepontonabschnitte umfasst, die mit schwimmenden beweglichen Systemen (7a, 7b, 7c, 7d) verbunden sind, wobei dieser durch ein entsprechendes so genanntes schwimmendes bewegliches Kaisystem (107a, 107b, 107c, 107d), die zum Verschieben entlang eines herkömmlichen festen schwimmenden Pontons (3) geeignet sind, und durch ein so genanntes schwimmendes bewegliches Kopfsystem (207a, 207b, 207c, 207d), angeordnet am zum Steg an der Seite für die Zufahrt von Booten entgegengesetzten Ende, das als Warteponton dienen kann, ergänzt wird.

14. - Gesamtheit nach einem der Ansprüche 1 bis 10, **dadurch gekennzeichnet, dass** die Verbindung zwischen den Stegen oder Stegabschnitten und den beweglichen Systemen auf einem entsprechenden Niveau erfolgt, das an beiden Seiten des Stegs je nach Bedarf zwei gleiche oder verschiedene Längen des Platzes für die Boote B und Wasserfahrzeuge ermöglicht.

15. - Gesamtheit nach einem der Ansprüche 4 bis 14, **dadurch gekennzeichnet, dass** jeder feste Punkt durch mehrere Duckdalben gebildet wird, deren verknüpfte Wagen durch eine Gelenkverbindungsvorrichtung verbunden sind.

16. - Hafenanlage umfassend eine Gesamtheit von schwimmenden beweglichen Systemen mit Antrieb nach einem der Ansprüche 1 bis 15.
